(19) Europäisches Patentamt
European Patent Office
Office européen des brevets

(11) EP 4 671 714 A1

(12) EUROPEAN PATENT APPLICATION

(43) Date of publication:
31.12.2025 Bulletin 2026/01

(21) Application number: 25184625.9

(22) Date of filing: 23.06.2025

(51) International Patent Classification (IPC):
$G01K\ 7/01^{(2006.01)}$ $\qquad$ $G01K\ 1/02^{(2021.01)}$

(52) Cooperative Patent Classification (CPC):
G01K 7/01; G01K 1/026; G01K 2219/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.06.2024 US 202463664581 P
18.06.2025 US 202519242771

(71) Applicant: Analog Devices, Inc.
Wilmington, MA 01887 (US)

(72) Inventors:
• LU, Yujie
Wilmington, 01887 (US)
• MAYES, Michael Keith
Wilmington, 01887 (US)
• KAPLAN, Todd Stuart
Wilmington, 01887 (US)

(74) Representative: Wallin, Nicholas James
Withers & Rogers LLP
2 London Bridge
London SE1 9RA (GB)

(54) **TECHNIQUES FOR BETA COMPENSATION IN BIPOLAR JUNCTION TRANSISTOR TEMPERATURE SENSOR**

(57)    Various techniques to eliminate the error caused by variable $\beta$ coupled with a series resistance in BJTs are described. Multiple known currents are applied to a terminal of the BJT and a corresponding $V_{BE}$ is generated. A resistor R is coupled in series with a base or emitter of the BJT and an analog-to-digital converter (ADC) is used to measure the voltage across the resistor R for each of the known currents. These voltages are used to determine ratios of $\beta$ change, which are then used to determine a temperature of the BJT.

FIG. 2

EP 4 671 714 A1

**Description**

**CLAIM OF PRIORITY**

This application claims the benefit of priority to U.S. Provisional Application Serial No. 63/664,581, titled "TECHNIQUES FOR BETA COMPENSATION IN BIPOLAR JUNCTION TRANSISTOR TEMPERATURE SENSOR" to Yujie Lu et al., filed June 26, 2024, which is incorporated by reference herein in its entirety.

**FIELD OF THE DISCLOSURE**

This document pertains generally, but not by way of limitation, to temperature sensor circuits.

**BACKGROUND**

Temperature sensing is an important function in numerous applications across various industries, including electronics, automotive, aerospace, and manufacturing. The ability to accurately measure temperature is important for monitoring and controlling processes, ensuring safety, and improving performance. Among the various technologies used for temperature measurement, Bipolar Junction Transistors (BJTs) have been widely adopted due to their sensitivity and the direct correlation between their electrical characteristics and temperature.

BJTs operate based on the movement of electrons and holes across a junction, which includes two types of semiconductor material: p-type and n-type. The voltage across the base-emitter junction of a BJT, denoted as $V_{BE}$, is particularly sensitive to temperature changes. This characteristic allows BJTs to function as effective temperature sensors by correlating shifts in $V_{BE}$ with temperature variations.

In some BJT-based temperature sensing circuits, two currents are applied to the emitter and the corresponding $V_{BE}$ is measured for each current. The difference in base-emitter voltage at different currents, often represented as $\Delta V_{BE}$, is used to calculate the temperature. This method exploits the exponential relationship between the junction voltage and the current through the device, which is described by the diode equation.

**SUMMARY OF THE DISCLOSURE**

This disclosure describes various techniques to eliminate the error caused by variable $\beta$ coupled with a series resistance in BJTs. Multiple known currents are applied to a terminal of the BJT and a corresponding $V_{BE}$ is generated. A resistor R is coupled in series with a base or emitter of the BJT and an analog-to-digital converter (ADC) is used to measure the voltage across the resistor R for each of the known currents. These voltages are used to determine ratios of $\beta$ change, which are then used to determine a temperature of the BJT.

In some aspects, this disclosure is directed to a temperature sensor device with beta compensation for determining a temperature of a bipolar junction transistor having a base terminal, a collector terminal, and an emitter terminal, the temperature sensor device comprising: a programmable current source configured for generating a first current, a second current, and a third current; a first analog-to-digital converter having inputs coupled with the emitter terminal and base terminal and configured for generating corresponding base-emitter difference voltages in response to the first current, the second current, and the third current; and a resistive element coupled with either the base terminal or the emitter terminal; a second analog-to-digital converter having inputs coupled with terminals of the resistive element and configured for generating corresponding sense voltages in response to the first current, the second current, and the third current; and a control circuit configured for: receiving the base-emitter difference voltages and the sense voltages; and determining the temperature of the bipolar junction transistor using: the base-emitter difference voltages and the sense voltages; and ratios of the first current, the second current, and the third current; and generating an output signal representing the determined temperature.

In some aspects, this disclosure is directed to a method of using beta compensation for determining a temperature of a bipolar junction transistor having a base terminal, a collector terminal, and an emitter terminal, the method comprising: coupling a resistive element with either the base terminal or the emitter terminal; generating a first current, a second current, and a third current; generating corresponding base-emitter difference voltages in response to the first current, the second current, and the third current; and generating corresponding sense voltages in response to the first current, the second current, and the third current; receiving the base-emitter difference voltages and the sense voltages; determining the temperature of the bipolar junction transistor using: the base-emitter difference voltages and the sense voltages; and ratios of the first current, the second current, and the third current; and generating an output signal representing the determined temperature.

In some aspects, this disclosure is directed to a temperature sensor device with beta compensation for determining a temperature of a bipolar junction transistor having a base terminal, a collector terminal, and an emitter terminal, the temperature sensor device comprising: a programmable current source configured for generating a first current, a second current, a third current, and a fourth current; a first analog-to-digital converter having inputs coupled with the emitter terminal and base terminal and configured for generating corresponding base-emitter difference voltages in response to the first current, the second current, the third current, and the fourth current; and a resistive element coupled with either the base terminal or the emitter terminal; a second analog-to-digital converter having inputs coupled with terminals of the resistive element and configured for generating corresponding sense voltages in response to the first current, the second current, the third current, and the fourth current; and a control circuit configured for: receiving the base-emitter difference voltages and the sense voltages; determining at least one of a value of a parasitic emitter resistance of the bipolar junction transistor and a value of a parasitic base resistance of the bipolar junction transistor; and determining a temperature of the bipolar junction transistor using: at least one of the parasitic base resistance and the parasitic emitter resistance; the base-emitter difference voltages and the sense voltages; and ratios of the first current, the second current, the third current, and the fourth current.

**BRIEF DESCRIPTION OF THE DRAWINGS**

In the drawings, which are not necessarily drawn to scale, like numerals may describe similar components in different views. The drawings illustrate generally, by way of example, but not by way of limitation, various embodiments discussed in the present document.

FIG. 1 depicts an example of a BJT coupled with a programmable current source.

FIG. 2 depicts an example of a temperature sensor device using beta compensation and a 4-point measurement, in accordance with various techniques of this disclosure.

FIG. 3 depicts another example of a temperature sensor device using beta compensation and a 4-point measurement, in accordance with various techniques of this disclosure.

FIG. 4 depicts another example of a temperature sensor device using beta compensation and a 4-point measurement, in accordance with various techniques of this disclosure.

FIG. 5 depicts another example of a temperature sensor device using beta compensation and a 4-point measurement, in accordance with various techniques of this disclosure.

FIG. 6 depicts another example of a temperature sensor device using beta compensation and a 4-point measurement, in accordance with various techniques of this disclosure.

FIG. 7 depicts an example of a temperature sensor device using beta compensation and a 3-point measurement, in accordance with various techniques of this disclosure.

FIG. 8 depicts another example of a temperature sensor device 800 using beta compensation and a 3-point measurement, in accordance with various techniques of this disclosure.

FIG. 9 depicts another example of a temperature sensor device 900 using beta compensation and a 3-point measurement, in accordance with various techniques of this disclosure.

FIG. 10 is an example of a temperature sensor device using beta compensation and a 3-point measurement, in accordance with various techniques of this disclosure.

FIG. 11 is an example of a temperature sensor device using beta compensation and a 3-point measurement, in accordance with various techniques of this disclosure.

FIG. 12 is an example of a temperature sensor device that uses the beta compensation of this disclosure and that uses a multiple-BJT connection technique.

FIG. 13 is another example of a temperature sensor device 1300 that uses the beta compensation of this disclosure and that uses a multiple-BJT connection technique.

FIG. 14 is a flow diagram of an example of a method of using beta compensation for determining a temperature of a bipolar junction transistor having a base terminal, a collector terminal, and an emitter terminal.

## DETAILED DESCRIPTION

The Bipolar Junction Transistor (BJT) is widely utilized as a temperature sensor. The fundamental concept involves shorting the base and collector terminals to ground and using a programmable current source to supply two different currents to the emitter terminal, measuring the corresponding base-emitter voltages ($V_{BE}$), and using their difference ($\Delta V_{BE}$) to compute the temperature of the BJT.

With the application of more advanced process technologies, such as 3 nanometer (nm) and 5nm, the dependence of beta ($\beta$) on collector current and temperature increases, leading to inaccuracies in the collector current ratio that is crucial for accurate temperature computation. The present inventors have recognized that the variability in $\beta$, especially when coupled with series resistance at the base and emitter, may introduce significant errors during temperature measurements.

For example, the $\beta$ of the BJT not only becomes smaller (less than 1) but also more dependent on the collector current and temperature. This dependency leads to inaccuracies in the collector current ratio, which is used for accurately calculating $\Delta V_{BE}$. In addition, factors such as PCB trace resistance and the length of remote lines introduce series resistances, denoted as Re and Rb for the emitter and base, respectively. The variability in $\beta$ significantly impacts the voltage across these series resistances, and traditional methods fail to correct this error effectively. The present inventors have recognized a need to reduce or eliminate these errors.

This disclosure describes various techniques to eliminate the error caused by variable $\beta$ coupled with a series resistance in BJTs. Multiple known currents are applied to a terminal of the BJT and a corresponding $V_{BE}$ is generated. A resistor R is coupled in series with a base or emitter of the BJT and an analog-to-digital converter (ADC) is used to measure the voltage across the resistor R for each of the known currents. These voltages are used to determine ratios of $\beta$ change, which are then used to determine a temperature of the BJT.

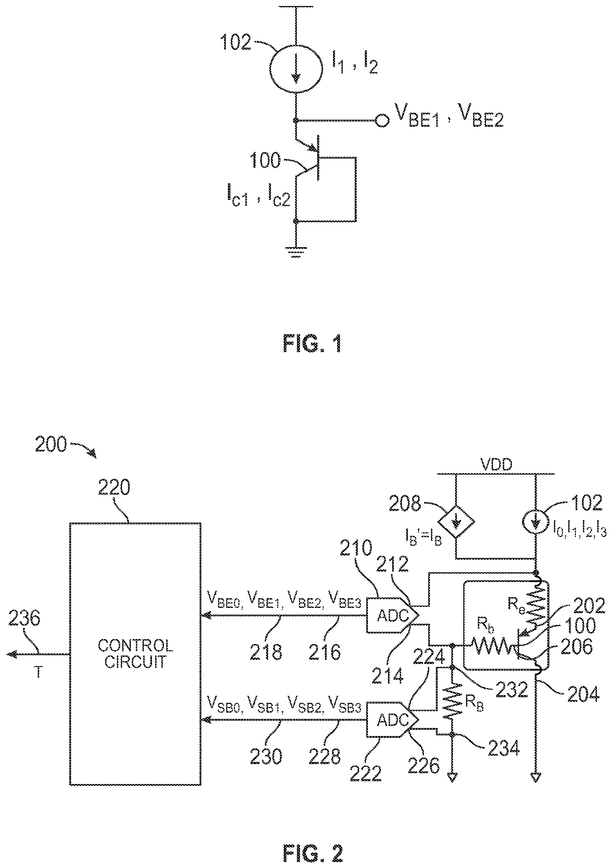

FIG. 1 depicts an example of a BJT 100 coupled with a programmable current source 102. In the example shown in FIG. 1, a programmable current source 102 is configured to apply two known currents $I_1$, $I_2$ to a terminal, e.g., the emitter, of the BJT 100 and a corresponding $V_{BE}$ is generated for each of those two currents, shown below in Equations 1A and 2A:

$$V_{BE1} = \frac{kT}{q}\eta \ln\left(\frac{I_{c1}}{I_S}\right) \qquad\qquad \text{Eq. 1A}$$

$$V_{BE2} = \frac{kT}{q}\eta \ln\left(\frac{I_{c2}}{I_S}\right) \qquad\qquad \text{Eq. 2A}$$

As seen above in Equations 1 and 2, the base-emitter difference voltage $V_{BE}$ is a function of Boltzmann's constant k, temperature T, the ideality factor $\eta$, electron charge q, the collector currents $I_{C1}$, and $I_{C2}$, and the saturation current $I_S$.

A difference between the two voltages $V_{BE1}$ and $V_{BE2}$, or $\Delta V_{BE}$, is determined, and the temperature T of the BJT may be determined using the $\Delta V_{BE}$, shown below in Equations 3A and 4A. Generally, $\beta$ is large, so that the variation of $\beta$ with respect to collector current may be ignored. In this case, the ratio of collector currents may be considered the same as the emitter current ratio.

$$\Delta V_{BE} = V_{BE1} - V_{BE2} = \frac{kT}{q}\eta \ln\left(\frac{I_{c1}}{I_{c2}}\right) = \frac{kT}{q}\eta \ln\left(\frac{I_1}{I_2}\right) \qquad \text{Eq. 3A}$$

$$T = \frac{q\Delta V_{BE}}{\eta k \ln\left(\frac{I_1}{I_2}\right)} \qquad\qquad \text{Eq. 4A}$$

As seen in the temperature equation of Equation 4, the collector current and saturation current terms are no longer present and the temperature may be determined using the two known currents $I_1$ and $I_2$. The BJT shown in FIG. 1 is a diode-connected BJT, where the collector and base terminals are connected together and effectively shorted. In theory, the expected output of the current source is $I$. However, due to errors in the current source, the actual output is $\alpha I (\alpha \neq 1)$.

FIG. 2 depicts an example of a temperature sensor device 200 using beta compensation and a 4-point measurement, in accordance with various techniques of this disclosure. The temperature sensor device 200 depicts a new approach to beta compensation in BJT temperature sensing. This approach uses a current mirror $I'_b$ mirrored from base current $I_b$ and feed back to an emitter terminal together with a configurable excitation current source, namely programmable current source 102. Equivalently, the collector current is driven by this configurable current source. The resistive elements $R_e$ and $R_b$ represent parasitic resistance on the emitter terminal 202 and the base terminal 206, respectively, of the remote BJT 100. The resistive elements $R_E$ and $R_B$ represent sense resistances on the emitter and base side on a chip.

The temperature sensor device 200 is an example of a collector-driver 4-point measurement with $I_B$ sense resistors, where a 4-point measurement means that the programmable current source 102 feeds four different excitation currents ($I_0, I_1, I_2, I_3$) into the collector terminal 204 of the BJT 100. In FIG. 2, the resistive element $R_B$ is coupled between the base terminal 206 and ground.

The temperature sensor device 200 includes a current mirror circuit 208 configured for mirroring a base current $I_b$ of the BJT 100. The current mirror circuit 208 generates a current mirror current $I'_b$ from the base current $I_b$ and feed back to the emitter terminal 202 together with the four different excitation currents ($I_0, I_1, I_2, I_3$). The current mirror circuit 208 is coupled in a parallel configuration with the programmable current source 102.

The temperature sensor device 200 includes a first analog-to-digital converter 210 having inputs 212, 214 coupled with the emitter terminal 202 and the base terminal 206, respectively, and configured for generating, at an output 216, digital output signals 218 representing corresponding base-emitter difference voltages ($V_{BE0}, V_{BE1}, V_{BE2}, V_{BE3}$) in response to the four different excitation currents ($I_0, I_1, I_2, I_3$). A control circuit 220 receives the digital output signals 218.

The temperature sensor device 200 further includes a second analog-to-digital converter 222 having inputs 224, 226 coupled with terminals 232, 234 of the resistive element and configured for generating, at an output 228, digital output signals 230 corresponding sense voltages ($V_{SB0}, V_{SB1}, V_{SB2}, V_{SB3}$) in response to the four different excitation currents ($I_0, I_1, I_2, I_3$). The control circuit 220 receives the digital output signals 230.

As described in more detail below, the control circuit 220 receives (via the digital output signals 218) the base-emitter difference voltages ($V_{BE0}, V_{BE1}, V_{BE2}, V_{BE3}$) and the sense voltages ($V_{SB0}, V_{SB1}, V_{SB2}, V_{SB3}$)(via the digital output signals 230) that correspond with each of the four different excitation currents ($I_0, I_1, I_2, I_3$). Using the equations below, the control circuit 220 determines the temperature T of the BJT 100 using 1) the base-emitter difference voltages and the sense voltages; and 2) ratios of the first current, the second current, the third current, and the fourth current. The ratios of the currents are shown below in Equations 9-11 as "N", which is described in Table 2. The control circuit 220 is configured for generating an output signal 236 representing the determined temperature T, where the output signal 236 is a digital representation of the temperature.

The output signal 236 of the temperature sensor device 200 represents the temperature T of the BJT 100. Because the BJT 100 is thermally coupled to an integrated circuit (IC) substrate, its temperature corresponds closely to the temperature of the chip itself. The control circuit 220 may transmit the output signal 236 to an external system or control unit. In some examples, the external system or control unit may form part of a thermal management system, which may use the output signal 236 to regulate cooling mechanisms, such as adjusting fan speed or activating other temperature control elements, thereby helping to maintain the chip within an optimal operating temperature range.

The techniques of FIG. 2 through FIG. 4 are described in more detail as follows. Within each temperature measurement, four excitation currents are denoted as $I_0, I_1, I_2, I_3$. For each excitation current, the voltage across base and emitter ($V_{BE}$), and the voltage across the sense resistor ($V_{SE}$ or $V_{SB}$) is measured as shown in Table 1. The sense resistor voltage ($V_{SE}$ or $V_{SB}$) is used to compute $I_E$ or $I_B$, which is then used to compute intermediate variables in the algorithm shown in Table 2.

Table 1: Measurement for Single Temperature Conversion in Collector-Driven 4-Point Measurement with $I_B$ or $I_E$ Sense Resistor:

| #n | $I_{C[n]}$ | $V_{SB}$ if $I_B$ sense resistor | $V_E$ if $I_E$ sense resistor | $V_{BE[n]}$ |
|---|---|---|---|---|
| 0 | $I_0$ | $V_{SB0}$ | $V_{SE0}$ | $V_{BE0}$ |
| 1 | $I_1$ | $V_{SB1}$ | $V_{SE1}$ | $V_{BE1}$ |
| 2 | $I_2$ | $V_{SB2}$ | $V_{SE2}$ | $V_{BE2}$ |
| 3 | $I_3$ | $VSB3$ | $V_{SE3}$ | $V_{BE3}$ |

Assume the variation of temperature within one temperature conversion is negligible. To make it clearer, Table 2 shows how multiple intermediate variables in the algorithm are computed from the measurement in Table 1. Table 2: Intermediate Variables in Collector-Driven 4-Point Measurement with $I_B$ or $I_E$ Sense Resistor:

| #n | $I_{C[n]}$ | Excitation Current Ratio w.r.t Unit Current $I_{C[0]}$ $N_{[n]} = I_{C[n]}/I_{C[0]}$ | $R_B$ | $I_B$ sense resistor | |
|---|---|---|---|---|---|
| | | | | $I_{B[n]}$ | $I_{E[n]}$ |
| 0 | $I_0$ | / | $R_B$ | $\dfrac{V_{SB0}}{R_B}$ | $I_0 + \dfrac{V_{SB0}}{R_B}$ |
| 1 | $I_1$ | $\dfrac{I_1}{I_0}$ | | $\dfrac{V_{SB1}}{R_B}$ | $I_1 + \dfrac{V_{SB1}}{R_B}$ |
| 2 | $I_2$ | $\dfrac{I_2}{I_0}$ | | $\dfrac{V_{SB2}}{R_B}$ | $I_2 + \dfrac{V_{SB2}}{R_B}$ |
| 3 | $I_3$ | $\dfrac{I_3}{I_0}$ | | $\dfrac{V_{SB3}}{R_B}$ | $I_3 + \dfrac{V_{SB3}}{R_B}$ |
| #n | $I_{C[n]}$ | $N_x = I_{C[n]}/I_{C[0]}$ | $R_E$ | $I_E$ sense resistor | |
| | | | | $I_{B[n]}$ | $I_{E[n]}$ |
| 0 | $I_0$ | / | | $\dfrac{V_{SE0}}{R_E} - I_0$ | $\dfrac{V_{SE0}}{R_E}$ |
| 1 | $I_1$ | $\dfrac{I_1}{I_0}$ | $R_E$ | $\dfrac{V_{SE1}}{R_E} - I_1$ | $\dfrac{V_{SE1}}{R_E}$ |
| 2 | $I_2$ | $\dfrac{I_2}{I_0}$ | | $\dfrac{V_{SE2}}{R_E} - I_2$ | $\dfrac{V_{SE2}}{R_E}$ |
| 3 | $I_3$ | $\dfrac{I_3}{I_0}$ | | $\dfrac{V_{SE3}}{R_E} - I_3$ | $\dfrac{V_{SE3}}{R_E}$ |

Once the intermediate variables are computed, apply KVL on $V_{BE}$ with respect to each excitation current:

$$V_{BE0} = R_b I_{B0} + R_e I_{E0} + \eta \frac{kT}{q} \ln\left(\frac{I_0}{I_s}\right) \tag{1}$$

$$V_{BE1} = R_b I_{B1} + R_e I_{E1} + \eta \frac{kT}{q} \ln\left(\frac{I_1}{I_s}\right) \tag{2}$$

$$V_{BE2} = R_b I_{B2} + R_e I_{E2} + \eta \frac{kT}{q} \ln\left(\frac{I_2}{I_s}\right) \tag{3}$$

$$V_{BE3} = R_b I_{B3} + R_e I_{E3} + \eta \frac{kT}{q} \ln\left(\frac{I_3}{I_s}\right) \tag{4}$$

Cancel $I_s$ by computing difference between $V_{BE1}$, $V_{BE0}$....

$$V_{10} = (I_{B1} - I_{B0})R_b + (I_{E1} - I_{E0})R_e + \eta \frac{kT}{q} \ln\left(\frac{I_1}{I_0}\right) \tag{5}$$

$$V_{21} = (I_{B2} - I_{B1})R_b + (I_{E2} - I_{E1})R_e + \eta \frac{kT}{q} \ln\left(\frac{I_2}{I_1}\right) \qquad (6)$$

$$V_{32} = (I_{B3} - I_{B2})R_b + (I_{E3} - I_{E2})R_e + \eta \frac{kT}{q} \ln\left(\frac{I_3}{I_2}\right) \qquad (7)$$

After inserting intermediate variables from Table 2, these equations may be rearranged to linear equations with three unknown variables $(R_b + R_e)$, $R_e$ and $\eta T$ if $I_B$ sense resistor; $(R_b + R_e)$, $R_e$ and $\eta T$ if $I_E$ sense resistor. The solution for $\eta T$ is as follows:

$$T = \frac{(a_2 b_1 - a_1 b_2)V_{10} + (a_0 b_2 - a_2 b_0)V_{21} + (a_1 b_0 - a_0 b_1)V_{32}}{\eta[(a_2 b_1 - a_1 b_2)c_0 + (a_0 b_2 - a_2 b_0)c_1 + (a_1 b_0 - a_0 b_1)c_2]} \qquad (8)$$

The assignments of $a_{0\sim2}$, $b_{0\sim2}$, $c_{0\sim2}$ are as follow if $I_B$ sense resistor:

$$a_0 = V_{SB1} - V_{SB0}; \; b_0 = N_1 - 1; c_0 = \frac{k}{q} ln(N_1) \qquad (9a)$$

$$a_1 = V_{SB2} - V_{SB1}; b_1 = N_2 - N_1; c_1 = \frac{k}{q} ln\left(\frac{N_2}{N_1}\right) \qquad (10a)$$

$$a_2 = V_{SB3} - V_{SB2}; b_2 = N_3 - N_2; c_2 = \frac{k}{q} ln\left(\frac{N_3}{N_2}\right) \qquad (11a)$$

The assignments of $a_{0\sim2}$, $b_{0\sim2}$, $c_{0\sim2}$ are as follow if $I_E$ sense resistor:

$$a_0 = V_{SE1} - V_{SE0}; b_0 = -N_1 + 1; c_0 = \frac{k}{q} ln(N_1) \qquad (9b)$$

$$a_1 = V_{SE2} - V_{SE1}; b_1 = -N_2 + N_1; c_1 = \frac{k}{q} ln\left(\frac{N_2}{N_1}\right) \qquad (10b)$$

$$a_2 = V_{SE3} - V_{SE2}; b_2 = -N_3 + N_2; c_2 = \frac{k}{q} ln\left(\frac{N_3}{N_2}\right) \qquad (11b)$$

The solution is function of excitation current ratio ($N_{[n]}$), voltage across base and emitter ($V_{BE[n]}$) and voltage across sense resistor ($V_{SB[n]}$).

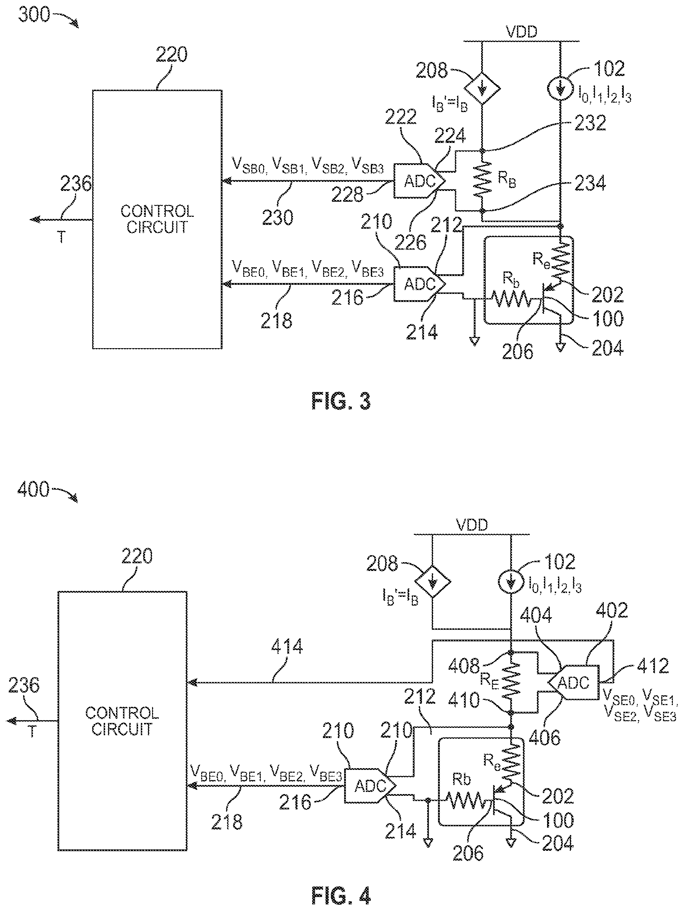

FIG. 3 depicts another example of a temperature sensor device 300 using beta compensation and a 4-point measurement, in accordance with various techniques of this disclosure. Many of the components in FIG. 3 are the same as those shown and described above with respect to FIG. 2. For brevity, such components will not be described again and the same reference numbers are used in FIG. 3.

Like the temperature sensor device 200 of FIG. 2, the temperature sensor device 300 uses a current mirror circuit 208 to generate a current mirror current $I'_b$ from the base current $I_b$ and feed back to the emitter terminal 202 together with the four different excitation currents ($I_0$, $I_1$, $I_2$, $I_3$). In the temperature sensor device 300, the sense resistive element $R_B$ is coupled between the current mirror circuit 208 and the emitter terminal 202.

Using the techniques described above with respect to FIG. 2, the control circuit 220 receives (via the digital output signals 218) the base-emitter difference voltages ($V_{BE0}$, $V_{BE1}$, $V_{BE2}$, $V_{BE3}$) and the sense voltages ($V_{SB0}$, $V_{SB1}$, $V_{SB2}$, $V_{SB3}$)(via the digital output signals 230) that correspond with each of the four different excitation currents ($I_0$, $I_1$, $I_2$, $I_3$). The control circuit 220 determines the temperature T of the BJT 100 using 1) the base-emitter difference voltages and the sense voltages; and 2) ratios of the first current, the second current, the third current, and the fourth current. The control circuit 220 is configured for generating an output signal 236 representing the determined temperature T, where the output signal 236 is a digital representation of the temperature. The control circuit 220 may transmit the output signal 236 to an external system or control unit.

FIG. 4 depicts another example of a temperature sensor device 400 using beta compensation and a 4-point measurement, in accordance with various techniques of this disclosure. Many of the components in FIG. 4 are the same as those shown and described above with respect to FIG. 2. For brevity, such components will not be described again and the same reference numbers are used in FIG. 4.

Like the temperature sensor device 200 of FIG. 2, the temperature sensor device 400 uses a current mirror circuit 208 to generate a current mirror current $I'_b$ from the base current $I_b$ and feed back to the emitter terminal 202 together with the four different excitation currents ($I_0$, $I_1$, $I_2$, $I_3$). In the temperature sensor device 400, the sense resistive element $R_E$ is coupled between the current mirror circuit 208 and the emitter terminal 202. The current mirror circuit 208 is coupled in a parallel configuration with the programmable current source 102.

The temperature sensor device 400 includes a third analog-to-digital converter 402 having inputs 404, 406 coupled with terminals 408, 410 of the sense resistive element $R_E$ and configured for generating, at an output 412, digital output signals 414 corresponding sense voltages ($V_{SE0}$, $V_{SE1}$, $V_{SE2}$, $V_{SE3}$) in response to the four different excitation currents ($I_0$, $I_1$, $I_2$, $I_3$). The control circuit 220 receives the digital output signals 414 from the third analog-to-digital converter 402 and the digital output signals 218 from the first analog-to-digital converter 210.

Using the techniques described above with respect to FIG. 4, the control circuit 220 receives (via the digital output signals 218) the base-emitter difference voltages ($V_{BE0}$, $V_{BE1}$, $V_{BE2}$, $V_{BE3}$). and the sense voltages ($V_{SE0}$, $V_{SE1}$, $V_{SE2}$, $V_{SE3}$)(via the digital output signals 414) that correspond with each of the four different excitation currents ($I_0$, $I_1$, $I_2$, $I_3$). The control circuit 220 determines the temperature T of the BJT 100 using 1) the base-emitter difference voltages and the sense voltages; and 2) ratios of the first current, the second current, the third current, and the fourth current. The control circuit 220 is configured for generating an output signal 236 representing the determined temperature T, where the output signal 236 is a digital representation of the temperature. The control circuit 220 may transmit the output signal 236 to an external system or control unit.

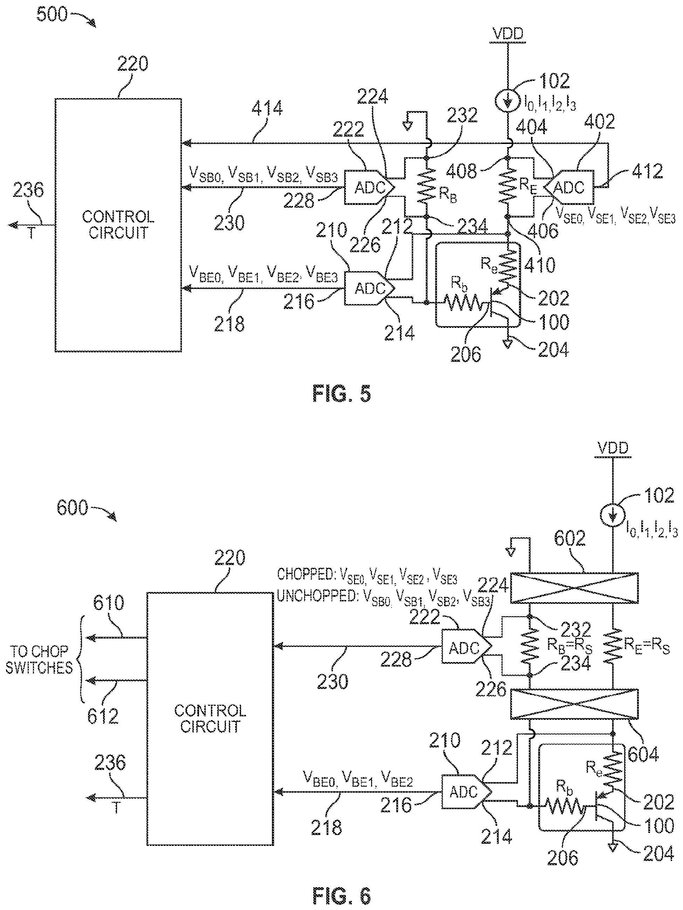

FIG. 5 depicts another example of a temperature sensor device 500 using beta compensation and a 4-point measurement, in accordance with various techniques of this disclosure. The temperature sensor device 500 uses an emitter-driven 4-point measurement technique with $I_B$ and $I_E$ sense resistors. Many of the components in FIG. 5 are the same as those shown and described above with respect to FIG. 2. For brevity, such components will not be described again and the same reference numbers are used in FIG. 5.

In FIG. 2- FIG. 4, collector current is controlled by a current mirror. Inaccuracies in this current mirror may introduce errors into the results. To address this limitation, the temperature sensor device 500 uses two sense resistors to measure the emitter current $I_E$ and the base current $I_B$, allowing their difference to determine the collector current $I_C$. This approach enables direct driving of the emitter of the BJT 100, which may eliminate any inaccuracies of the current mirror.

Like in FIG. 2, the second analog-to-digital converter 222 has inputs 224, 226 coupled with terminals 232, 234 of the resistive element $R_B$, which is coupled with the base terminal 206. The second analog-to-digital converter 222 is configured for generating, at an output 228, digital output signals 230 corresponding sense voltages ($V_{SB0}$, $V_{SB1}$, $V_{SB2}$, $V_{SB3}$) in response to the four different excitation currents ($I_0$, $I_1$, $I_2$, $I_3$). The control circuit 220 receives the digital output signals 230.

The temperature sensor device 500 includes another sense resistive element $R_E$ coupled between the programmable current source 102 and the emitter terminal 202. The temperature sensor device 500 also includes a third analog-to-digital converter 402 having inputs 404, 406 coupled with terminals 408, 410 of the sense resistive element $R_E$. The third analog-to-digital converter 402 is configured for generating, at an output 412, digital output signals 414 corresponding sense voltages ($V_{SE0}$, $V_{SE1}$, $V_{SE2}$, $V_{SE3}$) in response to the four different excitation currents ($I_0$, $I_1$, $I_2$, $I_3$). The control circuit 220 receives the digital output signals 414.

The control circuit 220 receives the base-emitter difference voltages ($V_{BE0}$, $V_{BE1}$, $V_{BE2}$, $V_{BE3}$), the first sense voltages ($V_{SB0}$, $V_{SB1}$, $V_{SB2}$, $V_{SB3}$), and the second sense voltages ($V_{SE0}$, $V_{SE1}$, $V_{SE2}$, $V_{SE3}$) that correspond to the four different excitation currents ($I_0$, $I_1$, $I_2$, $I_3$). The control circuit 220 determines a temperature T of the BJT 100 using 1) the base-emitter difference voltages, 2) the first sense voltages, and 3) the second sense voltages, and 4) ratios of the first current, the second current, the third current, and the fourth current as described in more detail below. The ratios of the currents are shown below in Equations 20-22 as "N".

The control circuit 220 is configured for generating an output signal 236 representing the determined temperature T, where the output signal 236 is a digital representation of the temperature. The control circuit 220 may transmit the output signal 236 to an external system or control unit.

The techniques of FIG. 5 and FIG. 6 are described in more detail as follows. Each temperature conversion involves applying four excitation currents ($I_0$, $I_1$, $I_2$, $I_3$) directly to the emitter. Two sense resistors, denoted as $R_B$, $R_E$ are connected to the base and emitter terminals, respectively. Sense resistors may be calibrated so that the resistances of $R_B$, $R_E$ are known as well as how $R_B$, $R_E$ change with respect to temperature. The resistance of $R_B$, $R_E$ may be arbitrary values.

For each excitation current, four measurements are used, as shown in Table 3. The voltage across $R_E$ is measured and denoted as $V_{SE0}$, $V_{SE1}$, $V_{SE2}$, $V_{SE3}$. The voltage across $R_B$ is measured and denoted as $V_{SB0}$, $V_{SB1}$, $V_{SB2}$,

$V_{SB3}$. The voltage across the emitter and base terminals is measured and denoted as $V_{BE0}$, $V_{BE1}$, $V_{BE2}$, $V_{BE3}$.

Table 3: Measurement for Single Temperature Conversion in Emitter-Driven 4-Point Measurement with IB and IE Sense Resistors:

| #n | $I_{E[n]}$ | Voltage across $R_E$ | Voltage across $R_B$ | $V_{BE[n]}$ |
|---|---|---|---|---|
| 0 | $I_0$ | $V_{SE0}$ | $V_{SB0}$ | $V_{BE0}$ |
| 1 | $I_1$ | $V_{SE1}$ | $V_{SB1}$ | $V_{BE1}$ |
| 2 | $I_2$ | $V_{SE2}$ | $V_{SB2}$ | $V_{BE2}$ |
| 3 | $I_3$ | $V_{SE3}$ | $V_{SB3}$ | $V_{BE3}$ |

Table 4 shows how multiple intermediate variables in the algorithm are computed from the measurement in Table 3 including ratio of different $I_C$ w.r.t $I_{C0}$.

Table 4: Intermediate Variables in Emitter-Driven 4-Point Measurement with IB, IE Sense Resistors:

| #n | $I_{E[n]}$ | $R_{B[n]}$ | $R_{E[n]}$ | $I_{B[n]}$ | $I_{C[n]}$ | $N_{[n]} = I_{C[n]}/I_{c[0]}$ |
|---|---|---|---|---|---|---|
| 0 | $I_0 = \dfrac{V_{SE0}}{R_E}$ | | | $\dfrac{V_{SB0}}{R_B}$ | $\dfrac{V_{SE0}}{R_E} - \dfrac{V_{SB0}}{R_B}$ | $/$ |
| 1 | $I_1 = \dfrac{V_{SE1}}{R_E}$ | | | $\dfrac{V_{SB1}}{R_B}$ | $\dfrac{V_{SE1}}{R_E} - \dfrac{V_{SB1}}{R_B}$ | $\dfrac{\left(\dfrac{V_{SE1}}{R_E} - \dfrac{V_{SB1}}{R_B}\right)}{\left(\dfrac{V_{SE0}}{R_E} - \dfrac{V_{SB0}}{R_B}\right)}$ |
| 2 | $I_2 = \dfrac{V_{SE2}}{R_E}$ | $R_B$ | $R_E$ | $\dfrac{V_{SB2}}{R_B}$ | $\dfrac{V_{SE2}}{R_E} - \dfrac{V_{SB2}}{R_B}$ | $\dfrac{\left(\dfrac{V_{SE2}}{R_E} - \dfrac{V_{SB2}}{R_B}\right)}{\left(\dfrac{V_{SE0}}{R_E} - \dfrac{V_{SB0}}{R_B}\right)}$ |
| 3 | $I_3 = \dfrac{V_{SE3}}{R_E}$ | | | $\dfrac{V_{SB3}}{R_B}$ | $\dfrac{V_{SE3}}{R_E} - \dfrac{V_{SB3}}{R_B}$ | $\dfrac{\left(\dfrac{V_{SE3}}{R_E} - \dfrac{V_{SB3}}{R_B}\right)}{\left(\dfrac{V_{SE0}}{R_E} - \dfrac{V_{SB0}}{R_B}\right)}$ |

However, by doing that, the collector current ratio computation $N_{[n]}$ introduces multiple items of $R_B$ and $R_E$ which indicates that the spread of the sense resistors may contribute error to the results. To ease this problem, sense resistors $R_E$ and $R_B$ should have same resistance, but this may still include some error. To further eliminate this problem, the circuit in FIG 6 may be used.

When the system is in the chopped state, the excitation current passes through $R_B$ to the emitter, and an analog-to-digital converter measures the voltage across $R_B$, yielding readings $V_{SE0}$, $V_{SE1}$, $V_{SE2}$, $V_{SE3}$, which represent the sense resistor voltages on the emitter side. In the unchopped state, $R_B$ is connected to the base, and the analog-to-digital converter measures the voltage across $R_B$, producing readings $V_{SB0}$, $V_{SB1}$, $V_{SB2}$, $V_{SB3}$, which represent the sense resistor voltage on the base side. Additionally, another analog-to-digital converter measures the base-emitter voltage ($V_{BE}$) for each excitation current, resulting in measurements $V_{BE0}$, $V_{BE1}$, $V_{BE2}$, $V_{BE3}$.

As mentioned above, temperature variation within one temperature conversion is negligible, so the resistance of the sense resistor is the same and denoted as $R_S$. To make it clearer, Table 5 shows how multiple intermediate variables in the algorithm are computed from the measurement in Table 3 including ratio of different $I_C$ with respect to $I_{C0}$.

Table 5: Intermediate Parameters in Emitter-Driven 4-Point Measurement with Chopping IB, IE Sense Resistors:

| #n | $I_{E[n]}$ | $R_{B[n]}$ | $R_{E[n]}$ | $I_{B[n]}$ | $I_{C[n]}$ | $N_{[n]} = I_{C[n]}/I_{C[0]}$ |
|---|---|---|---|---|---|---|
| 0 | $I_0 = \dfrac{V_{SE0}}{R_S}$ | | | $\dfrac{V_{SB0}}{R_S}$ | $\dfrac{V_{SE0}}{R_S} - \dfrac{V_{SB0}}{R_S}$ | / |
| 1 | $I_1 = \dfrac{V_{SE1}}{R_S}$ | | | $\dfrac{V_{SB1}}{R_S}$ | $\dfrac{V_{SE1}}{R_S} - \dfrac{V_{SB1}}{R_S}$ | $\dfrac{V_{SE1} - V_{SB1}}{V_{SE0} - V_{SB0}}$ |
| 2 | $I_2 = \dfrac{V_{SE2}}{R_S}$ | $R_S$ | $R_S$ | $\dfrac{V_{SB2}}{R_S}$ | $\dfrac{V_{SE2}}{R_S} - \dfrac{V_{SB2}}{R_S}$ | $\dfrac{V_{SE2} - V_{SB2}}{V_{SE0} - V_{SB0}}$ |
| 3 | $I_3 = \dfrac{V_{SE3}}{R_S}$ | | | $\dfrac{V_{SB3}}{R_S}$ | $\dfrac{V_{SE3}}{R_S} - \dfrac{V_{SB3}}{R_S}$ | $\dfrac{V_{SE3} - V_{SB3}}{V_{SE0} - V_{SB0}}$ |

Apply KVL on $V_{BE}$ with respect to each excitation current.

$$V_{BE0} = I_{B0}R_b + I_{E0}R_e + \eta\frac{kT}{q}ln\left(\frac{I_{C0}}{I_s}\right) \qquad (12)$$

$$V_{BE1} = I_{B1}R_b + I_{E1}R_e + \eta\frac{kT}{q}ln\left(\frac{I_{C1}}{I_s}\right) \qquad (13)$$

$$V_{BE2} = I_{B2}R_b + I_{E2}R_e + \eta\frac{kT}{q}ln\left(\frac{I_{C2}}{I_s}\right) \qquad (14)$$

$$V_{BE3} = I_{B3}R_b + I_{E3}R_e + \eta\frac{kT}{q}ln\left(\frac{I_{C3}}{I_s}\right) \qquad (15)$$

Cancel $I_s$ by computing difference between $V_{BE1}$, $V_{BE0}$··· .

$$V_{10} = V_{BE1} - V_{BE0} = (I_{B1} - I_{B0})R_b + (I_{E1} - I_{E0})R_e + \frac{k}{q}ln\left(\frac{I_{C1}}{I_{C0}}\right)\eta T \qquad (16)$$

$$V_{21} = V_{BE2} - V_{BE1} = (I_{B2} - I_{B1})R_b + (I_{E2} - I_{E1})R_e + \frac{k}{q}ln\left(\frac{I_{C2}}{I_{C1}}\right)\eta T \qquad (17)$$

$$V_{32} = V_{BE3} - V_{BE2} = (I_{B3} - I_{B2})R_b + (I_{E3} - I_{E2})R_e + \frac{k}{q}ln\left(\frac{I_{C3}}{I_{C2}}\right)\eta T \qquad (18)$$

The solution for $\eta T$ in the linear equation in three unknown variables ($R_b$, $R_e$, $T$) is as follows:

$$T = \frac{(a_2b_1 - a_1b_2)V_{10} + (a_0b_2 - a_2b_0)V_{21} + (a_1b_0 - a_0b_1)V_{32}}{\eta[(a_2b_1 - a_1b_2)c_0 + (a_0b_2 - a_2b_0)c_1 + (a_1b_0 - a_0b_1)c_2]} \qquad (19)$$

Assignment of $a_{0\sim2}$, $b_{0\sim2}$, $c_{0\sim2}$ are as follows. In FIG. 5, the solution is a function of $V_{BE[n]}$, $V_{SB[n]}$, $V_{SE[n]}$, $R_E$ and $R_B$. The resistances $R_E$ and $R_B$ will cancel out each other if they have same value, but that may not happen in practice in a real chip. If FIG. 6 is used, the solution is a function of $V_{BE[n]}$, $V_{SB[n]}$ and $V_{SE[n]}$.

$$a_0 = I_{B1} - I_{B0}; b_0 = I_{E1} - I_{E0}; \; c_0 = \frac{k}{q} ln(N_1) \qquad (20)$$

$$a_1 = I_{B2} - I_{B1}; b_1 = I_{E2} - I_{E1}; \; c_1 = \frac{k}{q} ln\left(\frac{N_2}{N_1}\right) \qquad (21)$$

$$a_2 = I_{B3} - I_{B2}; \; b_2 = I_{E3} - I_{E2}; \; c_2 = \frac{k}{q} ln\left(\frac{N_3}{N_2}\right) \qquad (22)$$

FIG. 6 depicts another example of a temperature sensor device 600 using beta compensation and a 4-point measurement, in accordance with various techniques of this disclosure. Like FIG. 5, the temperature sensor device 600 uses an emitter-driven 4-point measurement technique with $I_B$ and $I_E$ sense resistors. Instead of the third analog-to-digital converter, the temperature sensor device 600 includes two chop switches to reduce errors due to variations in values of the resistive elements $R_E$ and $R_B$. Many of the components in FIG. 6 are the same as those shown and described above with respect to FIG. 2. For brevity, such components will not be described again and the same reference numbers are used in FIG. 6.

The temperature sensor device 600 includes a first chop switch 602 and a second chop switch 604. A first resistive element $R_B$ is coupled with the base terminal 206 and a second resistive element $R_E$ is coupled with the emitter terminal 202. The first resistive element and the second resistive element are coupled between the first chop switch 602 and the second chop switch 604. The control circuit 220 is configured to generate chop signals 610, 612 that control operation of the first chop switch 602 and the second chop switch 604 to reduce errors due to variations in values of the first resistive element and the second resistive element.

When the chop switches are in a chopped state, the second analog-to-digital converter 222 generates digital output signals 230 that represent first sense voltages ($V_{SE0}$, $V_{SE1}$, $V_{SE2}$, $V_{SE3}$) in response to the four different excitation currents ($I_0$, $I_1$, $I_2$, $I_3$). When the chop switches are in an unchopped state, the second analog-to-digital converter 222 generates digital output signals 230 that represent corresponding second sense voltages ($V_{SB0}$, $V_{SB1}$, $V_{SB2}$, $V_{SB3}$) in response to the four different excitation currents ($I_0$, $I_1$, $I_2$, $I_3$).

Like before, the control circuit 220 also receives the base-emitter difference voltages ($V_{BE0}$, $V_{BE1}$, $V_{BE2}$, $V_{BE3}$) that correspond to the four different excitation currents ($I_0$, $I_1$, $I_2$, $I_3$). The control circuit 220 determines a temperature T of the BJT 100 using 1) the base-emitter difference voltages, 2) the first sense voltages, and 3) the second sense voltages, and 4) ratios of the first current, the second current, and the third current, as described in more detail below. The control circuit 220 is configured for generating an output signal 236 representing the determined temperature T, where the output signal 236 is a digital representation of the temperature. The control circuit 220 may transmit the output signal 236 to an external system or control unit.

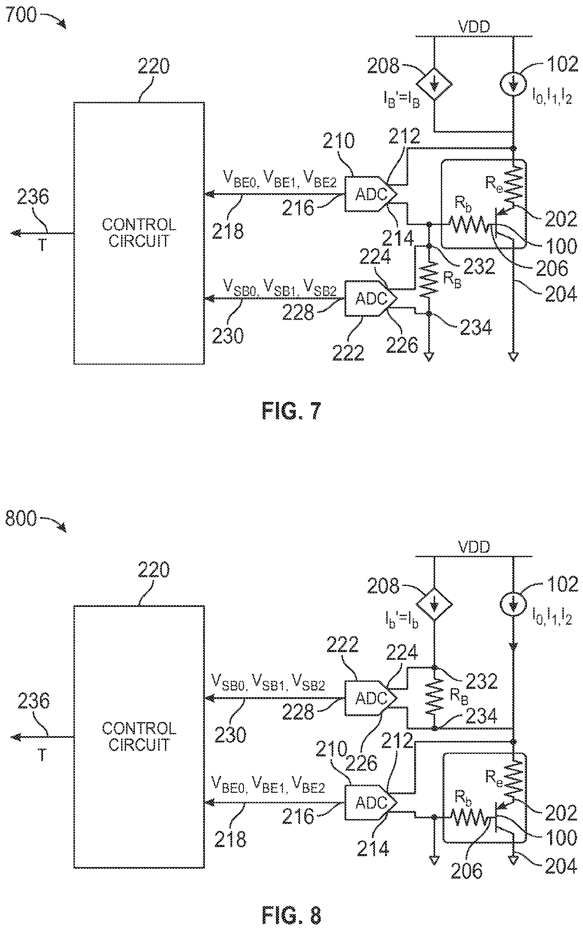

FIG. 7 depicts an example of a temperature sensor device 700 using beta compensation and a 3-point measurement, in accordance with various techniques of this disclosure. Unlike the temperature sensor devices described above, the temperature sensor device 700 uses three excitation currents rather than four and requires either or both known resistances of parasitic resistive elements $R_b$ or $R_e$ of the BJT 100. The temperature sensor device 700 uses a collector-driven 3-point measurement technique with $I_B$ sense resistor.

The temperature sensor device 700 is similar to the temperature sensor device 200 of FIG. 2, except that the programmable current source 102 generates three (not four) excitation currents ($I_0$, $I_1$, $I_2$). Like in FIG. 2, the resistive element $R_B$ is coupled between the base terminal 206 and ground. For brevity, the circuit will not be described in detail again.

As described in more detail below, the control circuit 220 receives (via the digital output signals 218) the base-emitter difference voltages ($V_{BE0}$, $V_{BE1}$, $V_{BE2}$) and the sense voltages ($V_{SB0}$, $V_{SB1}$, $V_{SB2}$)(via the digital output signals 230) that correspond with each of the three different excitation currents ($I_0$, $I_1$, $I_2$). Using the equations below, the control circuit 220 determines the temperature T of the BJT 100 using 1) the base-emitter difference voltages and the sense voltages; and 2) actual values of first current, the second current, and the third current. 3) values of $R_B$. The ratios of the currents are shown below in Equations 30-31 as "N", which is described in Table 7.

The control circuit 220 further uses at least one of a value of a parasitic emitter resistance $R_e$ and a value of a parasitic base resistance $R_b$. The control circuit 220 is configured for generating an output signal 236 representing the determined temperature T, where the output signal 236 is a digital representation of the temperature. The control circuit 220 may transmit the output signal 236 to an external system or control unit. In some examples, the external system or control unit may form part of a thermal management system, which may use the output signal 236 to regulate cooling mechanisms, such as adjusting fan speed or activating other temperature control elements, thereby helping to maintain the chip within an optimal operating temperature range.

The techniques of FIGS. 7-9 are described in more detail as follows. Within each temperature conversion, three

excitation currents ($I_0$, $I_1$, $I_2$) are applied. For each excitation current, the voltage across base and emitter ($V_{BE}$), and the voltage across sense resistor ($V_{SE}$ or $V_{SB}$) are measured. A sense resistor is used to compute $I_E$ or $I_B$.

Table 6: Measurement for Single Temperature Conversion in Collector-Driven 3-Point Measurement with IB or IE Sense Resistor:

| #n | $I_{C[n]}$ | $V_{SB[n]}$ if $I_B$ sense resistor | $V_{SE[n]}$ if $I_E$ sense resistor | $V_{BE[n]}$ |
|---|---|---|---|---|
| 0 | $I_0$ | $V_{SB0}$ | $V_{SE0}$ | $V_{BE0}$ |
| 1 | $I_1$ | $V_{SB1}$ | $V_{SE1}$ | $V_{BE1}$ |
| 2 | $I_2$ | $V_{SB2}$ | $V_{SE2}$ | $V_{BE2}$ |

Assume the temperature variation within one temperature conversion is negligible. To make it clearer, Table 7 shows how multiple intermediate variables in the algorithm are computed from the measurement in Table 6. Table 7: Intermediate Variables in Collector-Driven 3-Point Measurement with IB or IE Sense Resistor Algorithm:

| #n | $I_{C[n]}$ | $N_n = I_{C[n]}/I_{C0}$ | $R_{B[n]}$ | $I_B$ sense resistor | |
|---|---|---|---|---|---|
| | | | | $I_{B[n]}$ | $I_{E[n]}$ |
| 0 | $I_0$ | / | | $\dfrac{V_{SB0}}{R_B}$ | $\dfrac{V_{SB0}}{R_B} + I_0$ |
| 1 | $I_1$ | $\dfrac{I_1}{I_0}$ | $R_B$ | $\dfrac{V_{SB1}}{R_B}$ | $\dfrac{V_{SB1}}{R_B} + I_1$ |
| 2 | $I_2$ | $\dfrac{I_2}{I_0}$ | | $\dfrac{V_{SB2}}{R_B}$ | $\dfrac{V_{SB2}}{R_B} + I_2$ |
| #n | $I_{C[n]}$ | $N_n = I_{C[n]}/I_{C0}$ | $R_E$ | $I_E$ sense resistor | |
| | | | | $I_{B[n]}$ | $I_{E[n]}$ |
| 0 | $I_0$ | / | | $\dfrac{V_{SE0}}{R_E} - I_0$ | $\dfrac{V_{SE0}}{R_E}$ |
| 1 | $I_1$ | $\dfrac{I_1}{I_0}$ | $R_E$ | $\dfrac{V_{SE1}}{R_E} - I_1$ | $\dfrac{V_{SE1}}{R_E}$ |
| 2 | $I_2$ | $\dfrac{I_2}{I_0}$ | | $\dfrac{V_{SE2}}{R_E} - I_2$ | $\dfrac{V_{SE2}}{R_E}$ |

Apply KVL on $V_{BE}$ with respect to each excitation current.

$$V_{BE0} = I_{B0}R_b + I_{E0}R_e + \eta \frac{kT}{q} \ln\left(\frac{I_0}{I_s}\right) \qquad (23)$$

$$V_{BE1} = I_{B1}R_b + I_{E1}R_e + \eta \frac{kT}{q} \ln\left(\frac{I_1}{I_s}\right) \qquad (24)$$

$$V_{BE2} = I_{B2}R_b + I_{E2}R_e + \eta \frac{kT}{q} \ln\left(\frac{I_2}{I_s}\right) \qquad (25)$$

Cancel $I_s$ by computing the difference between $V_{BE1}$, $V_{BE0}$··· .

$$V_{10} = V_{BE1} - V_{BE0} = (I_{B1} - I_{B0})R_b + (I_{E1} - I_{E0})R_e + \frac{k}{q}ln(N_1)\eta T \quad (26)$$

$$V_{21} = V_{BE2} - V_{BE1} = (I_{B2} - I_{B1})R_b + (I_{E2} - I_{E1})R_e + \frac{k}{q}ln\left(\frac{N_2}{N_1}\right)\eta T \quad (27)$$

1> If parasitic resistance $R_e$ is known.

$$T = \frac{a_1 V_{10} - a_0 V_{21} + (a_0 b_1 - a_1 b_0)R_e}{\eta(a_1 c_0 - a_0 c_1)} \quad (28)$$

2> If parasitic resistance $R_b$ is known.

$$T = \frac{b_1 V_{10} - b_0 V_{21} + (a_1 b_0 - a_0 b_1)R_b}{\eta(b_1 c_0 - b_0 c_1)} \quad (29)$$

Assignments of $a_{0\sim1}$, $b_{0\sim1}$, $c_{0\sim1}$ as follow:

$$a_0 = (I_{B1} - I_{B0}); \ b_0 = (I_{E1} - I_{E0}); \ c_0 = \frac{k}{q}ln(N_1) \quad (30)$$

$$a_1 = (I_{B2} - I_{B1}); \ b_1 = (I_{E2} - I_{E1}); \ c_1 = \frac{k}{q}ln\left(\frac{N_2}{N_1}\right) \quad (31)$$

To improve accuracy, the temperature coefficient may be brought into consideration:

$$R_e \ or \ R_b = R_{ref}\left[1 + TC(T - T_{ref})\right] \quad (32)$$

Where $R_{ref}$ is the resistance of $R_e$ or $R_b$ at reference temperature ($T_{ref}$). $TC$ is the temperature coefficient. $R_e$ or $R_b$ may be inserted into the equations above to compute $T$. Previously, the sense resistance was assumed to be constant with respect to temperature.

1> If parasitic resistance $R_{ref}$ for $R_e$ is known, then equation (32) can be inserted into equation (28).

$$T = \frac{a_1 V_{10} - a_0 V_{21} + (a_0 b_1 - a_1 b_0)\left(1 - TC \cdot T_{ref}\right)R_{ref}}{\eta(a_1 c_0 - a_0 c_1) - (a_0 b_1 - a_1 b_0)TC \cdot R_{ref}} \quad (33)$$

Where assignments of $a_{0\sim1}$, $b_{0\sim1}$, $c_{0\sim1}$ are the same as equation (30) ~ (31).
2> If parasitic resistance $R_{ref}$ for $R_b$ is known, then equation (32) may be inserted into equation (29).

$$T = \frac{b_1 V_{10} - b_0 V_{21} + (a_1 b_0 - a_0 b_1)\left(1 - TC \cdot T_{ref}\right)R_{ref}}{\eta(b_1 c_0 - b_0 c_1) - (a_1 b_0 - a_0 b_1)TC \cdot R_{ref}} \quad (34)$$

FIG. 8 depicts another example of a temperature sensor device 800 using beta compensation and a 3-point measurement, in accordance with various techniques of this disclosure. The temperature sensor device 800 is another example of a collector-driven 3-point measurement technique and requires either or both known resistances of parasitic resistive elements $R_b$ or $R_e$ of the BJT 100.
The temperature sensor device 800 is similar to the temperature sensor device 300 of FIG. 3, except that the programmable current source 102 generates three (not four) excitation currents ($I_0$, $I_1$, $I_2$). Like in FIG. 3, the resistive element $R_B$ is placed on the base current mirror branch. For brevity, the circuit will not be described in detail again.

Using the techniques described above with respect to FIG. 8, the control circuit 220 receives (via the digital output signals 218) the base-emitter difference voltages ($V_{BE0}$, $V_{BE1}$, $V_{BE2}$) and the sense voltages ($V_{SB0}$, $V_{SB1}$, $V_{SB2}$)(via the digital output signals 230) that correspond with each of the three different excitation currents ($I_0$, $I_1$, $I_2$). The control circuit 220 determines the temperature T of the BJT 100 using 1) the base-emitter difference voltages and the sense voltages; and 2) ratios of the first current, the second current, and the third current. The control circuit 220 further uses at least one of a value of a parasitic emitter resistance $R_e$ and a value of a parasitic base resistance $R_d$.

The control circuit 220 is configured for generating an output signal 236 representing the determined temperature T, where the output signal 236 is a digital representation of the temperature. The control circuit 220 may transmit the output signal 236 to an external system or control unit.

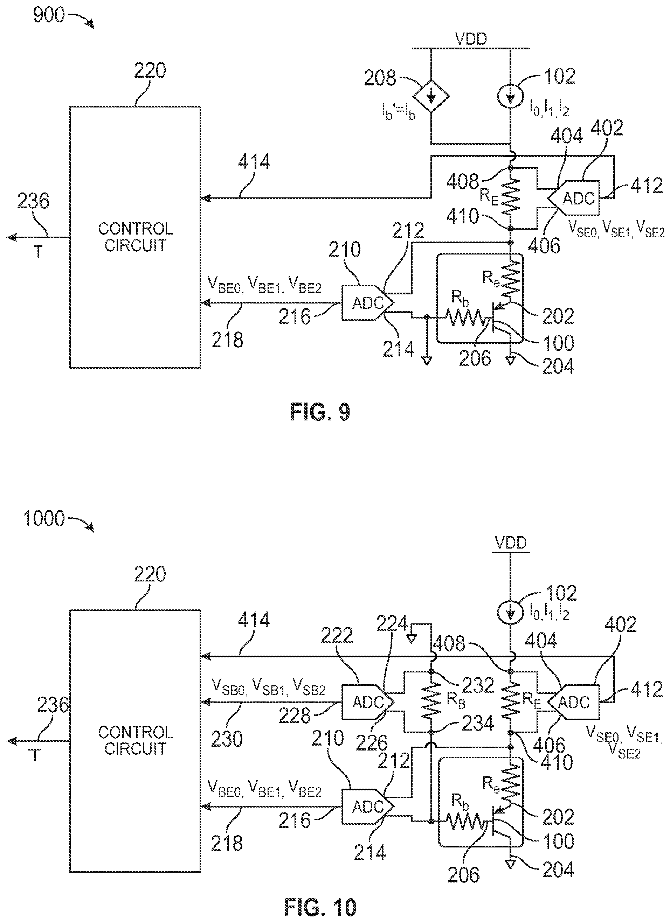

FIG. 9 depicts another example of a temperature sensor device 900 using beta compensation and a 3-point measurement, in accordance with various techniques of this disclosure. The temperature sensor device 900 is another example of a collector-driven 3-point measurement technique and requires either or both known resistances of parasitic resistive elements $R_b$ or $R_e$ of the BJT 100.

The temperature sensor device 900 is similar to the temperature sensor device 400 of FIG. 4, except that the programmable current source 102 generates three (not four) excitation currents ($I_0$, $I_1$, $I_2$). Like in FIG. 4, the resistive element $R_E$ is coupled between the programmable current source 102 and the emitter terminal 202. For brevity, the circuit will not be described in detail again.

Using the techniques described above with respect to FIG. 9, the control circuit 220 receives (via the digital output signals 218) the base-emitter difference voltages ($V_{BE0}$, $V_{BE1}$, $V_{BE2}$) and the IE sense voltages ($V_{SE0}$, $V_{SE1}$, $V_{SE2}$)(via the digital output signals 414) that correspond with each of the three different excitation currents ($I_0$, $I_1$, $I_2$). The control circuit 220 determines the temperature T of the BJT 100 using 1) the base-emitter difference voltages and the sense voltages; and 2) ratios of the first current, the second current, and the third current. The control circuit 220 further uses at least one of a value of a parasitic emitter resistance $R_e$ and a value of a parasitic base resistance $R_b$.

The control circuit 220 is configured for generating an output signal 236 representing the determined temperature T, where the output signal 236 is a digital representation of the temperature. The control circuit 220 may transmit the output signal 236 to an external system or control unit.

FIG. 10 is an example of a temperature sensor device 1000 using beta compensation and a 3-point measurement, in accordance with various techniques of this disclosure. The temperature sensor device 1000 uses an emitter-driven 3-point measurement technique with $I_B$ and $I_E$ sense resistors and requires either or both known resistances of parasitic resistive elements $R_b$ or $R_e$ of the BJT 100. Many of the components in FIG. 10 are the same as those shown and described above with respect to FIG. 5. For brevity, such components will not be described again and the same reference numbers are used in FIG. 5.

In FIG. 7- FIG. 9, collector current is controlled by a current mirror. Inaccuracies in this current mirror may introduce errors into the results. To address this limitation and like was used in FIG. 5, the temperature sensor device 1000 uses two sense resistive elements $R_E$ and $R_B$ to measure the emitter current $I_E$ and the base current $I_B$, respectively, allowing their difference to determine the collector current $I_C$. This approach enables direct driving of the emitter of the BJT 100, which may eliminate any inaccuracies of the current mirror.

The control circuit 220 receives the base-emitter difference voltages ($V_{BE0}$, $V_{BE1}$, $V_{BE2}$), the first sense voltages ($V_{SB0}$, $V_{SB1}$, $V_{SB2}$), and the second sense voltages ($V_{SE0}$, $V_{SE1}$, $V_{SE2}$) that correspond to the three different excitation currents ($I_0$, $I_1$, $I_2$). The control circuit 220 determines a temperature T of the BJT 100 using 1) the base-emitter difference voltages, 2) the first sense voltages, and 3) the second sense voltages, and 4) ratios of the first current, the second current, and the third current, as described in more detail below. The ratios of the currents are shown below in Equations 42-43 as "N", which is described in Table 9.

The control circuit 220 further uses at least one of a value of a parasitic emitter resistance $R_e$ and a value of a parasitic base resistance $R_b$. The control circuit 220 is configured for generating an output signal 236 representing the determined temperature T, where the output signal 236 is a digital representation of the temperature. The control circuit 220 may transmit the output signal 236 to an external system or control unit.

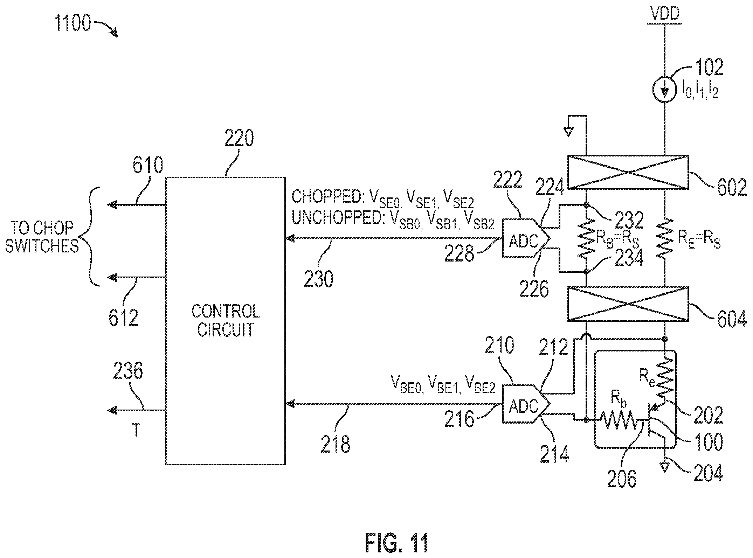

The techniques of FIGS. 10 and 11 are described in more detail as follows. Each temperature conversion involves applying three excitation currents ($I_0$, $I_1$, $I_2$) directly to the emitter. Two sense resistors, denoted as $R_B$, $R_E$ are connected to the base and emitter terminals, respectively. The sense resistors may be calibrated so that the resistances of $R_B$, $R_E$ are known as well as how $R_B$, $R_E$ change with respect to temperature. The resistance of $R_B$, $R_E$ may be arbitrary values.

For each excitation current, three measurements are implemented as shown in Table 8. The voltage across $R_E$ is measured and denoted as $V_{SE0}$, $V_{SE1}$, $V_{SE2}$; the voltage across $R_B$ is measured and denoted as $V_{SB0}$, $V_{SB1}$, $V_{SB2}$; and the voltage across emitter and base is measured and denoted as $V_{BE0}$, $V_{BE1}$, $V_{BE2}$. Table 8: Measurement for Single Temperature Conversion in Emitter Driven 3-Point Measurement with IB, IE Sense Resistors:

| #n | $I_{E[n]}$ | Voltage across $I_E$ sense resistor | Voltage across $I_B$ sense resistor | $V_{BE[n]}$ |
|---|---|---|---|---|
| 0 | $I_0$ | $V_{SE0}$ | $V_{SB0}$ | $V_{BE0}$ |
| 1 | $I_1$ | $V_{SE1}$ | $V_{SB1}$ | $V_{BE1}$ |
| 2 | $I_2$ | $V_{SE2}$ | $V_{SB2}$ | $V_{BE2}$ |

Assume that temperature variation within one temperature conversion is negligible. To make it clearer, Table 9 shows how multiple intermediate variables in algorithm are computed from measurement in Table 8 including ratio of different $I_C$ with respect to $I_{C0}$. Table 9: $I_C$ Ratio in Ratio in Emitter-Driven 3-Point Measurement with $I_E$, $I_B$ Sense Resistors:

| #n | $I_{E[n]}$ | $R_{B[n]}$ | $R_{E[n]}$ | $I_{B[n]}$ | $I_{C[n]}$ | $N_{[n]} = I_{Cn]}/I_{C[0]}$ |
|---|---|---|---|---|---|---|
| 0 | $I_0 = \dfrac{V_{SE0}}{R_E}$ | | | $\dfrac{V_{SB0}}{R_B}$ | $\dfrac{V_{SE0}}{R_E} - \dfrac{V_{SB0}}{R_B}$ | / |
| 1 | $I_1 = \dfrac{V_{SE1}}{R_E}$ | $R_B$ | $R_E$ | $\dfrac{V_{SB1}}{R_B}$ | $\dfrac{V_{SE1}}{R_E} - \dfrac{V_{SB1}}{R_B}$ | $\dfrac{\left(\dfrac{V_{SE1}}{R_E} - \dfrac{V_{SB1}}{R_B}\right)}{\left(\dfrac{V_{SE0}}{R_E} - \dfrac{V_{SB0}}{R_B}\right)}$ |
| 2 | $I_2 = \dfrac{V_{SE2}}{R_E}$ | | | $\dfrac{V_{SB2}}{R_B}$ | $\dfrac{V_{SE2}}{R_E} - \dfrac{V_{SB2}}{R_B}$ | $\dfrac{\left(\dfrac{V_{SE2}}{R_E} - \dfrac{V_{SB2}}{R_B}\right)}{\left(\dfrac{V_{SE0}}{R_E} - \dfrac{V_{SB0}}{R_B}\right)}$ |

However, by doing this, the collector current ratio computation introduces multiple items of $R_B$ and $R_E$ which indicates that the spread of the sense resistors may contribute errors to the results. This problem may be eased by using sense resistors $R_B$ and $R_E$ with the same resistance. To further solve this problem, the circuit shown in FIG. 11 may be used.

In FIG. 11, each temperature conversion involves applying three excitation currents ($I_0$, $I_1$, $I_2$) directly to the emitter. The two sense resistors $R_E$ and $R_B$ may be substantially identical and arbitrary in value. By using FIG. 11, the voltage across same sense resistor $R_B$ whose resistance is $R_S$ is measured and it is assumed that temperature variation within one temperature conversion is negligible.

When the system is in the chopped state, the excitation current passes through $R_B$ to the emitter, and ADC0 measures the voltage across $R_B$, yielding readings $V_{SE0}$, $V_{SE1}$, $V_{SE2}$, which represent the sense resistor voltage on the emitter side. In the unchopped state, $R_B$ is connected to the base, and ADC0 measures the voltage across $R_B$, producing readings $V_{SB0}$, $V_{SB1}$, $V_{SB2}$, which represent the sense resistor voltage on the base side. Additionally, ADC1 measures the base-emitter voltage ($V_{BE}$) for each excitation current, resulting in measurements $V_{BE0}$, $V_{BE1}$, $V_{BE2}$. Table 10: Intermediate Variables in Emitter-Driven 3-Point Measurements with Chopping IE, IB Sense Resistors:

| #n | $I_{E[n]}$ | $R_{B[n]}$ | $R_{E[n]}$ | $I_{B[n]}$ | $I_{C[n]}$ | $N_{[n]} = I_{C[n]}/I_{C[0]}$ |
|---|---|---|---|---|---|---|
| 0 | $I_0$ | | | $\dfrac{V_{SB0}}{R_s}$ | $\dfrac{V_{SE0} - V_{SB0}}{R_s}$ | / |
| 1 | $I_1$ | $R_s$ | | $\dfrac{V_{SB0}}{R_s}$ | $\dfrac{V_{SE1} - V_{SB1}}{R_s}$ | $\dfrac{(V_{SE1} - V_{SB1})}{(V_{SE0} - V_{SB0})}$ |
| 2 | $I_2$ | | | $\dfrac{V_{SB0}}{R_s}$ | $\dfrac{V_{SE2} - V_{SB2}}{R_s}$ | $\dfrac{(V_{SE2} - V_{SB2})}{(V_{SE0} - V_{SB0})}$ |

Apply KVL on $V_{BE}$ with respect to each excitation current:

$$V_{BE0} = I_{B0}R_b + I_{E0}R_e + \eta \frac{kT}{q} ln\left(\frac{I_{C0}}{I_s}\right) \tag{35}$$

$$V_{BE1} = I_{B1}R_b + I_{E1}R_e + \eta \frac{kT}{q} ln\left(\frac{I_{C1}}{I_s}\right) \tag{36}$$

$$V_{BE2} = I_{B2}R_b + I_{E2}R_e + \eta \frac{kT}{q} ln\left(\frac{I_{C2}}{I_s}\right) \tag{37}$$

Cancel $I_s$ by computing the difference between $V_{BE1}$, $V_{BE0}$...

$$V_{10} = V_{BE1} - V_{BE0} = (I_{B1} - I_{B0})R_b + (I_{E1} - I_{E0})R_e + \frac{k}{q} ln(N_1)\eta T \tag{38}$$

$$V_{21} = V_{BE2} - V_{BE1} = (I_{B2} - I_{B1})R_b + (I_{E2} - I_{E1})R_e + \frac{k}{q} ln\left(\frac{N_2}{N_1}\right)\eta T \tag{39}$$

If parasitic resistance $R_e$ is known then:

$$T = \frac{a_1 V_{10} - a_0 V_{21} + (a_0 b_1 - a_1 b_0)R_e}{\eta(a_1 c_0 - a_0 c_1)} \tag{40}$$

If parasitic resistance $R_b$ is known, then:

$$T = \frac{b_1 V_{10} - b_0 V_{21} + (a_1 b_0 - a_0 b_1)R_b}{\eta(b_1 c_0 - b_0 c_1)} \tag{41}$$

Assignments of $a_{0\sim1}$, $b_{0\sim1}$, $c_{0\sim1}$:

$$a_0 = I_{B[1]} - I_{B[0]}; \ b_0 = I_{E[1]} - I_{E[0]}; \ c_0 = \frac{k}{q} ln(N_1) \tag{42}$$

$$a_1 = I_{B[2]} - I_{B[1]}; \ b_1 = I_{E[2]} - I_{E[1]}; \ c_1 = \frac{k}{q} ln\left(\frac{N_2}{N_1}\right) \tag{43}$$

To improve accuracy, the temperature coefficient can be brought into consideration:

$$R_e \ or \ R_b = R_{ref}\left[1 + TC(T - T_{ref})\right] \tag{44}$$

where $R_{ref}$ is resistance of $R_e$ or $R_b$ at reference temperature ($T_{ref}$), and $TC$ is the temperature coefficient. $R_e$ or $R_b$ may be inserted into the equations above to compute T.

FIG. 11 is an example of a temperature sensor device 1100 using beta compensation and a 3-point measurement, in accordance with various techniques of this disclosure. The temperature sensor device 1100 uses an emitter-driven 3-point measurement technique with $I_B$ and $I_E$ sense resistors and requires either or both known resistances of parasitic resistive elements $R_b$ or $R_e$ of the BJT 100. Like in FIG. 6, instead of using a third analog-to-digital converter, the temperature sensor device 1100 includes two chop switches to reduce errors due to variations in values of the resistive elements $R_E$ and $R_B$. Many of the components in FIG. 11 are the same as those shown and described above with respect to FIG. 6. For brevity, such components will not be described again and the same reference numbers are used in FIG. 6.

When the chop switches are in a chopped state, the second analog-to-digital converter 222 generates digital output signals 230 that represent first sense voltages ($V_{SE0}$, $V_{SE1}$, $V_{SE2}$) in response to the three different excitation

currents ($I_0$, $I_1$, $I_2$). When the chop switches are in an unchopped state, the second analog-to-digital converter 222 generates digital output signals 230 that represent corresponding second sense voltages ($V_{SB0}$, $V_{SB1}$, $V_{SB2}$) in response to the three different excitation currents ($I_0$, $I_1$, $I_2$).

Like before, the control circuit 220 also receives the base-emitter difference voltages ($V_{BE0}$, $V_{BE1}$, $V_{BE2}$) that correspond to the three different excitation currents ($I_0$, $I_1$, $I_2$). The control circuit 220 determines a temperature T of the BJT 100 using 1) the base-emitter difference voltages, 2) the first sense voltages, and 3) the second sense voltages, and 4) ratios of the first current, the second current, and the third current, as described in more detail below. The control circuit 220 is configured for generating an output signal 236 representing the determined temperature T, where the output signal 236 is a digital representation of the temperature. The control circuit 220 may transmit the output signal 236 to an external system or control unit.

In some examples, the techniques of FIG. 5, FIG. 6, FIG. 10, and FIG. 11 may be combined. For FIG. 5 and FIG. 6, each measurement needs four excitation currents, and each current contains multiple measurements, which may slow down the output frequency. For FIG. 10 and FIG. 11, the parasitic resistance of at least one of the emitter terminal or the base terminal is required from a user. However, it is possible that the user does not know about the exact parasitic resistance.

To solve these limitations and in accordance with this disclosure, the techniques of FIG. 5 or FIG. 6 are used as calibration, which means feeding four excitation currents to determine both the parasitic base resistance $R_b$ and the parasitic emitter resistance $R_e$. Then, the techniques of FIG. 10 or FIG. 11 may be used with three excitation currents with the determined parasitic base resistance and/or the parasitic emitter resistance. Alternatively, the techniques of FIG. 10 or FIG. 11 may be used with two excitation currents with the determined parasitic base resistance and the parasitic emitter resistance.

Using these techniques, the control circuit receives the four base-emitter difference voltages and the four sense voltages that correspond to the four excitation currents. For example, the control circuit 220 of FIG. 5 receives the base-emitter difference voltages ($V_{BE0}$, $V_{BE1}$, $V_{BE2}$, $V_{BE3}$) via the digital output signals 218 and the sense voltages ($V_{SB0}$, $V_{SB1}$, $V_{SB2}$, $V_{SB3}$ and $V_{SE1}$, $V_{SE2}$, $V_{SE3}$, $V_{SE4}$) via the digital output signals 230 and 414 that correspond to the four currents from the programmable current source 102. The control circuit 220 determines at least one of a value of a parasitic emitter resistance of the BJT 100 and a value of a parasitic base resistance of the BJT 100.

Then, using the techniques of FIG. 10 or FIG. 11, the control circuit 220 determines a temperature of the BJT 100 using 1) at least one of the parasitic base resistance and the parasitic emitter resistance; 2) the base-emitter difference voltages and the sense voltages; and 3) ratios of the first current, the second current, and the third current, as described above.

To summarize: step 1 uses the 4-point method (excitation currents) first using FIG. 5 or FIG. 6 to determine parasitic resistances Rb and Re. Step 2 applies the 3-point method using FIG. 10 or FIG. 11 to determine the temperature of the BJT 100. The details are presented below.

Follow the steps described above with respect to FIG. 5. After $I_s$ is cancelled by computing the difference between $V_{BE1}$, $V_{BE0}$ ..., linear equations are obtained with three unknown equations $R_b$, $R_e$, and $\eta T$ as below:

$$V_{10} = V_{BE1} - V_{BE0} = \left(\frac{V_{SB1}}{R_B} - \frac{V_{SB0}}{R_B}\right)R_b + \left(\frac{V_{SE1}}{R_E} - \frac{V_{SE0}}{R_E}\right)R_e + \frac{k}{q}ln\left(\frac{I_{C1}}{I_{C0}}\right)\eta T \quad (47)$$

$$V_{21} = V_{BE2} - V_{BE1} = \left(\frac{V_{SB2}}{R_B} - \frac{V_{SB1}}{R_B}\right)R_b + \left(\frac{V_{SE2}}{R_E} - \frac{V_{SE1}}{R_E}\right)R_e + \frac{k}{q}ln\left(\frac{I_{C2}}{I_{C1}}\right)\eta T \quad (48)$$

$$V_{32} = V_{BE3} - V_{BE2} = \left(\frac{V_{SB3}}{R_B} - \frac{V_{SB2}}{R_B}\right)R_b + \left(\frac{V_{SE3}}{R_E} - \frac{V_{SE2}}{R_E}\right)R_e + \frac{k}{q}ln\left(\frac{I_{C3}}{I_{C2}}\right)\eta T \quad (49)$$

The solutions of $R_b$ and $R_e$ are as follows:

$$\eta T = \frac{(a_2 b_1 - a_1 b_2)V_{10} + (a_0 b_2 - a_2 b_0)V_{21} + (a_1 b_0 - a_0 b_1)V_{32}}{(a_2 b_1 - a_1 b_2)c_0 + (a_0 b_2 - a_2 b_0)c_1 + (a_1 b_0 - a_0 b_1)c_2} \quad (50)$$

$$R_b = \frac{(c_2 b_1 - c_1 b_2)V_{10} + (c_0 b_2 - c_2 b_0)V_{21} + (c_1 b_0 - c_0 b_1)V_{32}}{(c_2 b_1 - c_1 b_2)a_0 + (c_0 b_2 - c_2 b_0)a_1 + (c_1 b_0 - c_0 b_1)a_2} \quad (51)$$

$$R_e = \frac{(a_2 c_1 - a_1 c_2)V_{10} + (a_0 c_2 - a_2 c_0)V_{21} + (a_1 c_0 - a_0 c_1)V_{32}}{(a_2 c_1 - a_1 c_2)b_0 + (a_0 c_2 - a_2 c_0)b_1 + (a_1 c_0 - a_0 c_1)b_2} \qquad (52)$$

Definitions of $a_{0\sim2}$, $b_{0\sim2}$, $c_{0\sim2}$ are the same in equation (20) ~ (22).

3-Point Normal Conversion:

Once the $R_b$ and $R_e$ are determined from the 4-point measurement above, then either $R_b$ or $R_e$ may be used as the known parasitic resistance and the 3-point method of FIG. 10 or FIG. 11 may be used to determine the temperature of the BJT 100.

2-Point Normal Conversion:

To further increase the output frequency, another solution is to feed 2 currents in normal conversion. With each excitation current, the voltage across the base and emitter ($V_{BE[n]}$), the voltage across the base sense resistor ($V_{SB[n]}$), and the voltage across the emitter sense resistor ($V_{SE[n]}$) are measured.

$$V_{BE0} = \frac{V_{SB0}}{R_B}R_b + \frac{V_{SE0}}{R_E}R_e + \eta \frac{kT}{q} ln\left(\frac{I_{C0}}{I_s}\right) \qquad (53)$$

$$V_{BE1} = \frac{V_{SB1}}{R_B}R_b + \frac{V_{SE1}}{R_E}R_e + \eta \frac{kT}{q} ln\left(\frac{I_{C1}}{I_s}\right) \qquad (54)$$

Since the resistances of the sense resistors $R_B$ and $R_E$ are known, after $V_{BE0}$ is subtracted from $V_{BE1}$, a linear equation is obtained with only one unknown variable $\eta T$:

$$V_{BE1} - V_{BE0} = \left(\frac{V_{SB1}}{R_B} - \frac{V_{SB0}}{R_B}\right)R_b + \left(\frac{V_{SE1}}{R_E} - \frac{V_{SE0}}{R_E}\right)R_e + \eta \frac{kT}{q} ln\left(\frac{I_{C1}}{I_{C0}}\right) \qquad (55)$$

The solution for T is as follows:

$$T = \frac{\left[V_{BE1} - V_{BE0} - \left(\frac{V_{SB1}}{R_B} - \frac{V_{SB0}}{R_B}\right)R_b - \left(\frac{V_{SE1}}{R_E} - \frac{V_{SE0}}{R_E}\right)R_e\right]}{\eta \frac{k}{q} ln\left(\frac{I_{C1}}{I_{C0}}\right)} \qquad (56)$$

To improve accuracy, the temperature coefficient may be taken into consideration. Equations (32) and (44) can be inserted into equation (56) to compute the temperature.

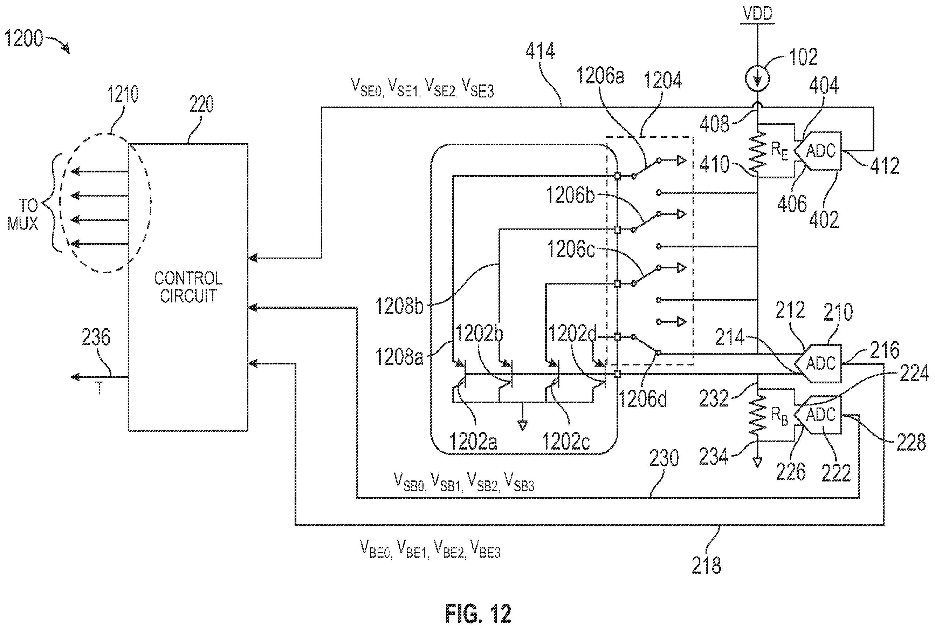

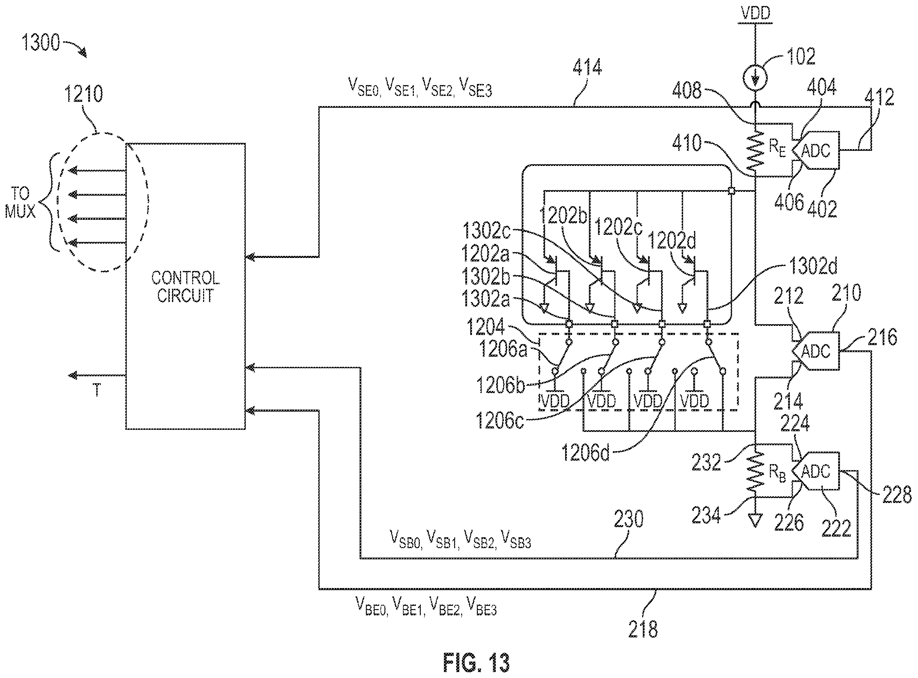

FIG. 12 is an example of a temperature sensor device 1200 that uses the beta compensation of this disclosure and that uses a multiple-BJT connection technique with a common base terminal. During the BJT temperature measurement, it may be desirable to measure the temperature of more than one BJT. However, if the temperature sensor devices described above are duplicated for each BJT, then there will be wasted pins on the chip. For example, to measure the temperature of N BJTs, then 2N pins in total (N for emitter and N for base) are needed. The temperature sensor device 1200 in FIG. 12 and the temperature sensor device 1300 in FIG. 13 depict techniques to save pins with multiple BJTs.

As seen in FIG. 12, the temperature sensor device 1200 includes multiple BJTs coupled together (BJTs 1202a through 1202d). In particular, their collector terminals are connected together and their base terminals are connected together and to the $R_B$ sense resistive element. Although shown with 4 BJTs, in some examples, the temperature sensor device 1200 includes more than 4 BJTs and in other examples, the temperature sensor device 1200 includes fewer than 4 BJTs.

The temperature sensor device 1200 includes a multiplexer 1204 having a plurality of switches 1206a through 1206d. Emitter terminals of the BJTs 1202a through 1202d are connected to corresponding switches of the multiplexer 1204, as seen in FIG. 12. For example, the emitter terminal 1208a of the BJT 1202a is connected to the switch 1206a of the multiplexer 1204, the emitter terminal 1208b of the BJT 1202b is connected to the switch 1206b of the multiplexer 1204, and so forth.

The control circuit 220 is configured for selectively operating the switches to determine corresponding temperatures of the BJTs. The control circuit 220 is configured for generating signals 1210 to the multiplexer 1204 to select a switch to couple a corresponding emitter terminal to ground (or other reference voltage) or to the $R_E$ sense resistive element. During a measurement, the multiplexer 1204 connects only one of the BJTs to the $R_E$ sense resistive element, and connects the other BJTs to ground. Using these techniques, the temperature sensor device 1200 needs only N+1 pins for N BJTs, rather than 2N pins.

FIG. 13 is another example of a temperature sensor device 1300 that uses the beta compensation of this disclosure and that uses a multiple-BJT connection technique with a common emitter terminal. The temperature sensor device 1300 is similar to the temperature sensor device 1200 shown in FIG. 12. Although shown with 4 BJTs, in some examples, the temperature sensor device 1300 includes more than 4 BJTs and in other examples, the temperature sensor device 1200 includes fewer than 4 BJTs.

The temperature sensor device 1300 includes multiple BJTs coupled together (BJTs 1202a through 1202d). Base terminals 1302a through 1302d of the BJTs 1202a through 1202d are connected to corresponding switches of the multiplexer 1204, as seen in FIG. 13.

Unlike in FIG. 12, the collector terminals in FIG. 13 are connected together, the emitter terminals are tied together to the $R_E$ sense resistive element, and the base terminals of the BJTs 1202a through 1202d are connected via corresponding switches of the multiplexer 1204 to a specific reference voltage, such as a supply voltage VDD, to prevent the current from flowing through the $R_B$ sense resistive element. For example, the base terminal 1302a of the BJT 1202a is connected to the switch 1206a of the multiplexer 1204, the base terminal 1302b of the BJT 1202b is connected to the switch 1206b of the multiplexer 1204, and so forth.

The control circuit 220 is configured for selectively operating the switches to determine corresponding temperatures of the BJTs. The control circuit 220 is configured for generating signals 1210 to the multiplexer 1204 to select a switch to couple a corresponding base terminal to VDD (or other reference voltage like their own emitter) or to the $R_B$ sense resistive element. During a measurement, the multiplexer 1204 connects only one of the BJTs to the $R_B$ sense resistive element, and connects the other BJTs to VDD or other reference (like their own emitter). Using these techniques, the temperature sensor device 1300 needs only N+1 pins for N BJTs, rather than 2N pins.

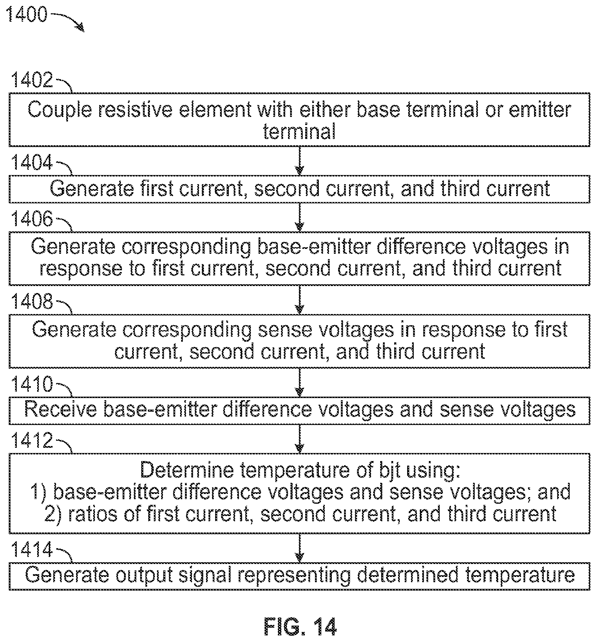

FIG. 14 is a flow diagram of an example of a method 1400 of using beta compensation for determining a temperature of a bipolar junction transistor having a base terminal, a collector terminal, and an emitter terminal. At block 1402, the method 1400 includes coupling a resistive element with either the base terminal or the emitter terminal.

At block 1404, the method 1400 includes generating a first current, a second current, and a third current.

At block 1406, the method 1400 includes generating corresponding base-emitter difference voltages in response to the first current, the second current, and the third current.

At block 1408, the method 1400 includes generating corresponding sense voltages in response to the first current, the second current, and the third current.

At block 1410, the method 1400 includes receiving the base-emitter difference voltages and the sense voltages.

At block 1412, the method 1400 includes determining the temperature of the bipolar junction transistor using 1) the base-emitter difference voltages and the sense voltages and 2) ratios of the first current, the second current, and the third current.

At block 1414, the method 1400 includes generating an output signal representing the determined temperature.

In some examples, the method includes generating a fourth current; generating a corresponding base-emitter difference voltage in response to the fourth current; generating a corresponding sense voltage in response to the fourth current; receiving the base-emitter difference voltages and the sense voltages; and determining the temperature of the bipolar junction transistor using: the base-emitter difference voltages and the sense voltages; and ratios of the first current, the second current, the third current, and the fourth current.

In some examples, the method includes mirroring a base current of the bipolar junction transistor.

In some examples, the resistive element is a first resistive element coupled between a programmable current source and the emitter terminal, and wherein the sense voltages are first sense voltages, and the method includes: coupling a second resistive element with the base terminal; generating corresponding second sense voltages in response to the first current, the second current, and the third current; receiving the base-emitter difference voltages, the first sense voltages, and the second sense voltages; and determining a temperature of the bipolar junction transistor using: the base-emitter difference voltages, the first sense voltages, and the second sense voltages; and ratios of the first current, the second current, and the third current.

In some examples, the method includes coupling the first resistive element and the second resistive element between a first chop switch and a second chop switch; and controlling operation of the first chop switch and the second chop switch to reduce errors due to variations in values of the first resistive element and the second resistive element.

In some examples, determining the temperature of the bipolar junction transistor further uses at least one of a value of a parasitic emitter resistance of the bipolar junction transistor and a value of a parasitic base resistance of the bipolar junction transistor.

In some examples, the bipolar junction transistor is first one of at least two bipolar junction transistors, wherein the base terminal is a first base terminal, wherein the collector terminal is a first collector terminal, wherein the emitter terminal is a first emitter terminal, and wherein the second one of the at least two bipolar junction transistors includes a second base terminal, a second collector terminal, and a second emitter terminal, and the method includes: coupling a first switch with either the first base terminal or the first emitter terminal; coupling a second switch with either the second base terminal or the second emitter terminal; and selectively operating the first switch and the second switch to determine corresponding temperatures of the at least two bipolar junction transistors.

In some examples, the method includes generating a fourth current; generating a corresponding base-emitter difference voltage in response to the fourth current; receiving the base-emitter difference voltages and the sense voltages; determining at least one of a value of a parasitic emitter resistance of the bipolar junction transistor and a value of a parasitic base resistance of the bipolar junction transistor; and determining the temperature of the bipolar junction transistor using: at least one of the parasitic base resistance and the parasitic emitter resistance; the base-emitter difference voltages and the sense voltages; and ratios of the first current, the second current, and the third current.

Various Notes

Each of the non-limiting claims or examples described herein may stand on its own, or may be combined in various permutations or combinations with one or more of the other examples.

The above detailed description includes references to the accompanying drawings, which form a part of the detailed description. The drawings show, by way of illustration, specific embodiments in which the invention may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more claims thereof), either with respect to a particular example (or one or more claims thereof), or with respect to other examples (or one or more claims thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact discs and digital video discs), magnetic cassettes, memory cards or sticks, random access memories (RAMs), read only memories (ROMs), and the like.

The above description is intended to be illustrative, and not restrictive. For example, the above-described examples (or one or more claims thereof) may be used in combination with each other. Other embodiments may be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments may be combined with each other in various combinations or permutations. The scope of the invention should be determined with reference to the appended claims, along with the full scope of equivalents to which such claims are entitled.

There follows a list of numbered features defining particular embodiments of the present disclosure. Where a numbered feature refers to one or more earlier numbered features then those features may be considered together in combination with each other.

1. A temperature sensor device with beta compensation for determining a temperature of a bipolar junction transistor having a base terminal, a collector terminal, and an emitter terminal, the temperature sensor device comprising:

> a programmable current source configured for generating a first current, a second current, and a third current;
> a first analog-to-digital converter having inputs coupled with the emitter terminal and base terminal and configured for generating corresponding base-emitter difference voltages in response to the first current, the second current, and the third current; and
> a resistive element coupled with either the base terminal or the emitter terminal;
> a second analog-to-digital converter having inputs coupled with terminals of the resistive element and configured for generating corresponding sense voltages in response to the first current, the second current, and the third current; and
> a control circuit configured for:

>> receiving the base-emitter difference voltages and the sense voltages; and
>> determining the temperature of the bipolar junction transistor using:

>>> the base-emitter difference voltages and the sense voltages; and
>>> ratios of the first current, the second current, and the third current; and

>> generating an output signal representing the determined temperature.

2. The temperature sensor device of feature 1, wherein the programmable current source is further configured for generating a fourth current, wherein the first analog-to-digital converter is further configured for generating a corresponding base-emitter difference voltage in response to the fourth current, wherein the second analog-to-digital converter is further configured for generating a corresponding sense voltage in response to the fourth current, and wherein the control circuit is further configured for:

> receiving the base-emitter difference voltages and the sense voltages; and
> determining a temperature of the bipolar junction transistor using:
> the base-emitter difference voltages and the sense voltages; and

ratios of the first current, the second current, the third current, and the fourth current.

3. The temperature sensor device of features 1 or 2, further comprising:
a current mirror circuit configured for mirroring a base current of the bipolar junction transistor.

4. The temperature sensor device of feature 3, wherein the resistive element is coupled between the current mirror circuit and the emitter terminal.

5. The temperature sensor device of feature 3 or 4, wherein the current mirror circuit is coupled in a parallel configuration with the programmable current source.

6. The temperature sensor device of any of features 1 to 5, wherein the resistive element is a first resistive element and is coupled between the programmable current source and the emitter terminal, wherein the inputs of the second analog-to-digital converter are coupled with terminals of the first resistive element, and wherein the sense voltages are first sense voltages, the temperature sensor device further comprising:

> a second resistive element coupled with the base terminal; and
> a third analog-to-digital converter having inputs coupled with terminals of the second resistive element and configured for generating corresponding second sense voltages in response to the first current, the second current, and the third current, and
> wherein the control circuit configured for receiving the base-emitter difference voltages and the sense voltages

and determining a temperature of the bipolar junction transistor using the base-emitter difference voltages and the sense voltages and ratios of the first current, the second current, and the third current is further configured for:

receiving the base-emitter difference voltages, the first sense voltages, and the second sense voltages; and determining a temperature of the bipolar junction transistor using:

the base-emitter difference voltages, the first sense voltages, and the second sense voltages; and ratios of the first current, the second current, and the third current.

7. The temperature sensor device of any of features 1 to 6, further comprising:

a first chop switch; and
a second chop switch,
wherein the first resistive element and the second resistive element are coupled between the chop switch and the second chop switch, and
wherein the control circuit is further configured for:
controlling operation of the first chop switch and the second chop switch to reduce errors due to variations in values of the first resistive element and the second resistive element.

8. The temperature sensor device of any of features 1 to 7, wherein the control circuit configured for determining the temperature of the bipolar junction transistor further uses:
at least one of a value of a parasitic emitter resistance of the bipolar junction transistor and a value of a parasitic base resistance of the bipolar junction transistor.

9. The temperature sensor device of any of features 1 to 8, wherein the bipolar junction transistor is first one of at least two bipolar junction transistors, wherein the base terminal is a first base terminal, wherein the collector terminal is a first collector terminal, wherein the emitter terminal is a first emitter terminal, and wherein the second one of the at least two bipolar junction transistors includes a second base terminal, a second collector terminal, and a second emitter terminal,
the temperature sensor device further comprising:

a multiplexer including:

a first switch coupled with either the first base terminal or the first emitter terminal; and
a second switch coupled with either the second base terminal or the second emitter terminal,

wherein the control circuit is configured for selectively operating the first switch and the second switch to determine corresponding temperatures of the at least two bipolar junction transistors.

10. The temperature sensor device of any of features 1 to 9, wherein the programmable current source is further configured for generating a fourth current, wherein the first analog-to-digital converter is further configured for generating a corresponding base-emitter difference voltage in response to the fourth current, wherein the second analog-to-digital converter is further configured for generating a corresponding sense voltage in response to the fourth current, and wherein the control circuit is further configured for:

receiving the base-emitter difference voltages and the sense voltages;
determining at least one of a value of a parasitic emitter resistance of the bipolar junction transistor and a value of a parasitic base resistance of the bipolar junction transistor; and
determining a temperature of the bipolar junction transistor using:

at least one of the parasitic base resistance and the parasitic emitter resistance;
the base-emitter difference voltages and the sense voltages; and
ratios of the first current, the second current, the third current, and the fourth current.

11. A method of using beta compensation for determining a temperature of a bipolar junction transistor having a base terminal, a collector terminal, and an emitter terminal, the method comprising:

coupling a resistive element with either the base terminal or the emitter terminal;

generating a first current, a second current, and a third current;
generating corresponding base-emitter difference voltages in response to the first current, the second current, and the third current; and
generating corresponding sense voltages in response to the first current, the second current, and the third current;
receiving the base-emitter difference voltages and the sense voltages;
determining the temperature of the bipolar junction transistor using:

the base-emitter difference voltages and the sense voltages; and
ratios of the first current, the second current, and the third current; and

generating an output signal representing the determined temperature.

12. The method of feature 11, comprising:

generating a fourth current;
generating a corresponding base-emitter difference voltage in response to the fourth current;
generating a corresponding sense voltage in response to the fourth current;
receiving the base-emitter difference voltages and the sense voltages; and
determining the temperature of the bipolar junction transistor using:

the base-emitter difference voltages and the sense voltages; and
ratios of the first current, the second current, the third current, and the fourth current.

13. The method of feature 11 or 12, further comprising:
mirroring a base current of the bipolar junction transistor.

14. The method of any of features 11 to 13, wherein the resistive element is a first resistive element coupled between a programmable current source and the emitter terminal, and wherein the sense voltages are first sense voltages, the method further comprising:

coupling a second resistive element with the base terminal; and
generating corresponding second sense voltages in response to the first current, the second current, and the third current;
receiving the base-emitter difference voltages, the first sense voltages, and the second sense voltages; and
determining a temperature of the bipolar junction transistor using:

the base-emitter difference voltages, the first sense voltages, and the second sense voltages; and
ratios of the first current, the second current, and the third current.

15. The method of any of features 11 to 14, further comprising:

coupling the first resistive element and the second resistive element between a first chop switch and a second chop switch; and
controlling operation of the first chop switch and the second chop switch to reduce errors due to variations in values of the first resistive element and the second resistive element.

16. The method of any of features 11 to 15, wherein determining the temperature of the bipolar junction transistor further uses at least one of a value of a parasitic emitter resistance of the bipolar junction transistor and a value of a parasitic base resistance of the bipolar junction transistor.

17. The method of any of features 11 to 16, wherein the bipolar junction transistor is first one of at least two bipolar junction transistors, wherein the base terminal is a first base terminal, wherein the collector terminal is a first collector terminal, wherein the emitter terminal is a first emitter terminal, and wherein the second one of the at least two bipolar junction transistors includes a second base terminal, a second collector terminal, and a second emitter terminal, the method further comprising:

coupling a first switch with either the first base terminal or the first emitter terminal;

coupling a second switch with either the second base terminal or the second emitter terminal; and
selectively operating the first switch and the second switch to determine corresponding temperatures of the at least two bipolar junction transistors.

18. The method of any of features 11 to 17, further comprising:

generating a fourth current;
generating a corresponding base-emitter difference voltage in response to the fourth current;
receiving the base-emitter difference voltages and the sense voltages;
determining at least one of a value of a parasitic emitter resistance of the bipolar junction transistor and a value of a parasitic base resistance of the bipolar junction transistor; and
determining the temperature of the bipolar junction transistor using:

at least one of the parasitic base resistance and the parasitic emitter resistance;
the base-emitter difference voltages and the sense voltages; and
ratios of the first current, the second current, and the third current.

19. A temperature sensor device with beta compensation for determining a temperature of a bipolar junction transistor having a base terminal, a collector terminal, and an emitter terminal, the temperature sensor device comprising:

a programmable current source configured for generating a first current, a second current, a third current, and a fourth current;
a first analog-to-digital converter having inputs coupled with the emitter terminal and base terminal and configured for generating corresponding base-emitter difference voltages in response to the first current, the second current, the third current, and the fourth current; and
a resistive element coupled with either the base terminal or the emitter terminal;
a second analog-to-digital converter having inputs coupled with terminals of the resistive element and configured for generating corresponding sense voltages in response to the first current, the second current, the third current, and the fourth current; and
a control circuit configured for:

receiving the base-emitter difference voltages and the sense voltages;
determining at least one of a value of a parasitic emitter resistance of the bipolar junction transistor and a value of a parasitic base resistance of the bipolar junction transistor; and
determining a temperature of the bipolar junction transistor using:

at least one of the parasitic base resistance and the parasitic emitter resistance;
the base-emitter difference voltages and the sense voltages; and
ratios of the first current, the second current, the third current, and the fourth current.

20. The temperature sensor device of feature 19, further comprising:

a first chop switch; and
a second chop switch,
wherein the first resistive element and the second resistive element are coupled between the chop switch and the second chop switch, and
wherein the control circuit is further configured for:
controlling operation of the first chop switch and the second chop switch to reduce errors due to variations in values of the first resistive element and the second resistive element.

## Claims

1. A temperature sensor device with beta compensation for determining a temperature of a bipolar junction transistor having a base terminal, a collector terminal, and an emitter terminal, the temperature sensor device comprising:

a programmable current source configured for generating a first current, a second current, and a third current;
a first analog-to-digital converter having inputs coupled with the emitter terminal and base terminal and configured for generating corresponding base-emitter difference voltages in response to the first current, the second current, and the third current; and

a resistive element coupled with either the base terminal or the emitter terminal;

a second analog-to-digital converter having inputs coupled with terminals of the resistive element and configured for generating corresponding sense voltages in response to the first current, the second current, and the third current; and

a control circuit configured for:

receiving the base-emitter difference voltages and the sense voltages; and
determining the temperature of the bipolar junction transistor using:

the base-emitter difference voltages and the sense voltages; and
ratios of the first current, the second current, and the third current; and

generating an output signal representing the determined temperature.

2. The temperature sensor device of claim 1, wherein the programmable current source is further configured for generating a fourth current, wherein the first analog-to-digital converter is further configured for generating a corresponding base-emitter difference voltage in response to the fourth current, wherein the second analog-to-digital converter is further configured for generating a corresponding sense voltage in response to the fourth current, and wherein the control circuit is further configured for:

receiving the base-emitter difference voltages and the sense voltages; and
determining a temperature of the bipolar junction transistor using:
the base-emitter difference voltages and the sense voltages; and

ratios of the first current, the second current, the third current, and the fourth current.

3. The temperature sensor device of claims 1 or 2, further comprising:

a current mirror circuit configured for mirroring a base current of the bipolar junction transistor;
wherein optionally:

a) the resistive element is coupled between the current mirror circuit and the emitter terminal; and/or
b) the current mirror circuit is coupled in a parallel configuration with the programmable current source.

4. The temperature sensor device of any of claims 1 to 3, wherein the resistive element is a first resistive element and is coupled between the programmable current source and the emitter terminal, wherein the inputs of the second analog-to-digital converter are coupled with terminals of the first resistive element, and wherein the sense voltages are first sense voltages, the temperature sensor device further comprising:

a second resistive element coupled with the base terminal; and
a third analog-to-digital converter having inputs coupled with terminals of the second resistive element and configured for generating corresponding second sense voltages in response to the first current, the second current, and the third current, and
wherein the control circuit configured for receiving the base-emitter difference voltages and the sense voltages and determining a temperature of the bipolar junction transistor using the base-emitter difference voltages and the sense voltages and ratios of the first current, the second current, and the third current is further configured for:

receiving the base-emitter difference voltages, the first sense voltages, and the second sense voltages; and
determining a temperature of the bipolar junction transistor using:

the base-emitter difference voltages, the first sense voltages, and the second sense voltages; and
ratios of the first current, the second current, and the third current.

5. The temperature sensor device of any of claims 1 to 4, further comprising:

a first chop switch; and

a second chop switch,

wherein the first resistive element and the second resistive element are coupled between the chop switch and the second chop switch, and

wherein the control circuit is further configured for:

controlling operation of the first chop switch and the second chop switch to reduce errors due to variations in values of the first resistive element and the second resistive element.

6. The temperature sensor device of any of claims 1 to 5, wherein the control circuit configured for determining the temperature of the bipolar junction transistor further uses:

at least one of a value of a parasitic emitter resistance of the bipolar junction transistor and a value of a parasitic base resistance of the bipolar junction transistor.

7. The temperature sensor device of any of claims 1 to 6, wherein the bipolar junction transistor is first one of at least two bipolar junction transistors, wherein the base terminal is a first base terminal, wherein the collector terminal is a first collector terminal, wherein the emitter terminal is a first emitter terminal, and wherein the second one of the at least two bipolar junction transistors includes a second base terminal, a second collector terminal, and a second emitter terminal,

the temperature sensor device further comprising:

a multiplexer including:

a first switch coupled with either the first base terminal or the first emitter terminal; and
a second switch coupled with either the second base terminal or the second emitter terminal,

wherein the control circuit is configured for selectively operating the first switch and the second switch to determine corresponding temperatures of the at least two bipolar junction transistors.

8. The temperature sensor device of any of claims 1 to 7, wherein the programmable current source is further configured for generating a fourth current, wherein the first analog-to-digital converter is further configured for generating a corresponding base-emitter difference voltage in response to the fourth current, wherein the second analog-to-digital converter is further configured for generating a corresponding sense voltage in response to the fourth current, and wherein the control circuit is further configured for:

receiving the base-emitter difference voltages and the sense voltages;
determining at least one of a value of a parasitic emitter resistance of the bipolar junction transistor and a value of a parasitic base resistance of the bipolar junction transistor; and
determining a temperature of the bipolar junction transistor using:

at least one of the parasitic base resistance and the parasitic emitter resistance;
the base-emitter difference voltages and the sense voltages; and
ratios of the first current, the second current, the third current, and the fourth current.

9. A method of using beta compensation for determining a temperature of a bipolar junction transistor having a base terminal, a collector terminal, and an emitter terminal, the method comprising:

coupling a resistive element with either the base terminal or the emitter terminal;
generating a first current, a second current, and a third current;
generating corresponding base-emitter difference voltages in response to the first current, the second current, and the third current; and
generating corresponding sense voltages in response to the first current, the second current, and the third current;
receiving the base-emitter difference voltages and the sense voltages;
determining the temperature of the bipolar junction transistor using:

the base-emitter difference voltages and the sense voltages; and
ratios of the first current, the second current, and the third current; and

generating an output signal representing the determined temperature.

**10.** The method of claim 9, comprising:

generating a fourth current;
generating a corresponding base-emitter difference voltage in response to the fourth current;
generating a corresponding sense voltage in response to the fourth current;
receiving the base-emitter difference voltages and the sense voltages; and
determining the temperature of the bipolar junction transistor using:

the base-emitter difference voltages and the sense voltages; and
ratios of the first current, the second current, the third current, and the fourth current.

**11.** The method of claim 9 or 10, further comprising one or more of:

a) mirroring a base current of the bipolar junction transistor; and/or
b) determining the temperature of the bipolar junction transistor further uses at least one of a value of a parasitic emitter resistance of the bipolar junction transistor and a value of a parasitic base resistance of the bipolar junction transistor.

**12.** The method of any of claims 9 to 11, wherein the resistive element is a first resistive element coupled between a programmable current source and the emitter terminal, and wherein the sense voltages are first sense voltages, the method further comprising:

coupling a second resistive element with the base terminal; and
generating corresponding second sense voltages in response to the first current, the second current, and the third current;
receiving the base-emitter difference voltages, the first sense voltages, and the second sense voltages; and
determining a temperature of the bipolar junction transistor using:

the base-emitter difference voltages, the first sense voltages, and the second sense voltages; and
ratios of the first current, the second current, and the third current.

**13.** The method of any of claims 9 to 12, further comprising:

coupling the first resistive element and the second resistive element between a first chop switch and a second chop switch; and
controlling operation of the first chop switch and the second chop switch to reduce errors due to variations in values of the first resistive element and the second resistive element.

**14.** The method of any of claims 9 to 13, wherein the bipolar junction transistor is first one of at least two bipolar junction transistors, wherein the base terminal is a first base terminal, wherein the collector terminal is a first collector terminal, wherein the emitter terminal is a first emitter terminal, and wherein the second one of the at least two bipolar junction transistors includes a second base terminal, a second collector terminal, and a second emitter terminal, the method further comprising:

coupling a first switch with either the first base terminal or the first emitter terminal;
coupling a second switch with either the second base terminal or the second emitter terminal; and
selectively operating the first switch and the second switch to determine corresponding temperatures of the at least two bipolar junction transistors.

**15.** The method of any of claims 9 to 14, further comprising:

generating a fourth current;
generating a corresponding base-emitter difference voltage in response to the fourth current;
receiving the base-emitter difference voltages and the sense voltages;
determining at least one of a value of a parasitic emitter resistance of the bipolar junction transistor and a value of a parasitic base resistance of the bipolar junction transistor; and
determining the temperature of the bipolar junction transistor using:

EP 4 671 714 A1

at least one of the parasitic base resistance and the parasitic emitter resistance;
the base-emitter difference voltages and the sense voltages; and
ratios of the first current, the second current, and the third current.

at least one of the parasitic base resistance and the parasitic emitter resistance;
the base-emitter difference voltages and the sense voltages; and
ratios of the first current, the second current, and the third current.

**FIG. 1**

**FIG. 2**

**FIG. 3**

**FIG. 4**

FIG. 5

FIG. 6

FIG. 7

FIG. 8

**FIG. 9**

**FIG. 10**

FIG. 11

**FIG. 12**

FIG. 13

1400 —

1402 —
| Couple resistive element with either base terminal or emitter terminal |

1404 —
| Generate first current, second current, and third current |

1406 —
| Generate corresponding base-emitter difference voltages in response to first current, second current, and third current |

1408 —
| Generate corresponding sense voltages in response to first current, second current, and third current |

1410 —
| Receive base-emitter difference voltages and sense voltages |

1412 —
| Determine temperature of bjt using: 1) base-emitter difference voltages and sense voltages; and 2) ratios of first current, second current, and third current |

1414 —
| Generate output signal representing determined temperature |

FIG. 14

Europäisches
Patentamt

European
Patent Office

Office européen
des brevets

## EUROPEAN SEARCH REPORT

**Application Number**

EP 25 18 4625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 554 469 B1 (THOMSON DAVID [US] ET AL) 29 April 2003 (2003-04-29) * abstract * * figures 1-4 * * column 2, line 58 - column 5, line 11 * ----- | 1-15 | INV. G01K7/01 G01K1/02 |
| A | US 5 195 827 A (AUDY JONATHAN M [US] ET AL) 23 March 1993 (1993-03-23) * abstract * * figures 1-4 * * column 3, line 61 - column 6, line 62 * ----- | 1-15 | |

**TECHNICAL FIELDS SEARCHED (IPC)**

G01K

The present search report has been drawn up for all claims

| Place of search | Date of completion of the search | Examiner |
|---|---|---|
| The Hague | 4 November 2025 | Totò, Nicola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 4625

This annex lists the patent family members relating to the patent documents cited in  the above-mentioned European search report.
The members are as contained in the European Patent Office EDP file on
The European Patent Office is in no way liable for these particulars which are merely given for the purpose of information.

04-11-2025

| Patent document cited in search report | | Publication date | Patent family member(s) | Publication date |
|---|---|---|---|---|
| US 6554469 | B1 | 29-04-2003 | NONE | |
| US 5195827 | A | 23-03-1993 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63664581, Yujie Lu